(19) Europäisches Patentamt
European Patent Office
Office européen des brevets

(11) **EP 1 936 520 A1**

(12) **EUROPEAN PATENT APPLICATION**
published in accordance with Art. 153(4) EPC

(43) Date of publication:
**25.06.2008 Bulletin 2008/26**

(51) Int Cl.:
*G06F 17/30* (2006.01)     *G06Q 50/00* (2006.01)

(21) Application number: **06811644.1**

(86) International application number:
**PCT/JP2006/320347**

(22) Date of filing: **11.10.2006**

(87) International publication number:
**WO 2007/043593 (19.04.2007 Gazette 2007/16)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.10.2005 JP 2005297026**

(71) Applicants:
• **Intellectual Property Bank Corp.**
  **Tokyo 105-0001 (JP)**
• **Masuyama, Hiroaki**
  **Toyonaka-shi,**
  **Osaka 560-0054 (JP)**

(72) Inventors:
• **MASUYAMA, Hiroaki**
  **Osaka 560-0054 (JP)**

• **ASADA, Makoto**
  **Tokyo 105-0001 (JP)**
• **HASUKO, Kazumi**
  **Tokyo 105-0001 (JP)**
• **HOTTA, Hideaki**
  **Tokyo 105-0001 (JP)**
• **ARAKI, Norio**
  **Tokyo 105-0001 (JP)**

(74) Representative: **Style, Kelda Camilla Karen**
  **Page White & Farrer**
  **Bedford House**
  **John Street**
  **London, WC1N 2BF (GB)**

(54) **COMPANY TECHNICAL DOCUMENT GROUP ANALYSIS SUPPORTING DEVICE**

(57) A company technical document group analysis supporting device comprises index term extracting means for extracting an index term from a group of documents of a subject company including a technical document group, clustering means for classifying the document group of the subject company under given conditions to acquire multiple clusters, number-of-documents determination means for determining the number of documents belong to each cluster, appearance frequency calculating means for calculating a function value of an appearance frequency of each extracted index term in each cluster, per-cluster keyword point calculating means for calculating the keyword point in each cluster by dividing the function value of the appearance frequency of each index term in each cluster by the number of documents belonging to each cluster, and entire-cluster keyword point calculating means for calculating the total for the entire clusters of the results of the calculation by the per-cluster keyword point calculating means for each index term. Thus, it possible to automatically analyze a technical document group to easily and appropriately evaluate the technical characteristics of a subject company.

FIG. 4

**Description**

TECHNICAL FIELD

The present invention relates to a technology for automatically analyzing a group of technical documents to make it possible to analyze the technical characteristics of the company being analyzed, and particularly to a company technical document group analysis supporting device, supporting method, and supporting program.

BACKGROUND ART

Companies daily create patent and other technical documents and a huge quantity of the document have been produced. Further, technology development activities are being pursued in many areas within individual companies. It is desirable to analyze the technical documents of companies, analyze the technical strengths and other technical characteristics of the companies, and utilize the results from this analysis to make business decisions, but it is difficult for humans to manually analyze a large number of technical documents spanning many fields. The best that humans can do is to make a comparison of the number of patent applications and number of patents for each company.

The "Keyword Analysis Method and Keyword Analysis Device for Patent and Other Information" disclosed in Japanese Unexamined Patent Application Publication No. 2002-189738 (Patent Document 1) creates a unique keyword list based on a keyword list of the subject patent and other information groups. Specifically, for each of the keywords of the keyword list, the number of applicants having the keyword is checked, and if a keyword is extracted from a single applicant company, that keyword is treated as a unique keyword.

[Patent Document 1] Japanese Unexamined Patent Application Publication No. 2002-189738 "Keyword Analysis Method and Keyword Analysis Device for Patent and Other Information"

DISCLOSURE OF THE INVENTION

Problem to be Solved by the Invention

In the technology described in the afore-mentioned Japanese Unexamined Patent Application Publication No. 2002-189738 (Patent Document 1), however, words specially created or words used as jargon by the applicant may be treated as unique keywords, which is insufficient for analyzing technical characteristics or for basing business decisions on such analysis.

An object of the present invention is to provide a company technical document group analysis supporting device, supporting method, and supporting program to make it possible to automatically analyze a technical document group to easily and appropriately evaluate the technical characteristics of a subject company.

Means to Solve the Problems

(1) In order to achieve the above object, the company technical document group analysis supporting device of the present invention comprises:

index term extraction means for extracting index terms from a document group of a subject company including technical documents;
clustering means for classifying the document group of the subject company under given conditions to obtain multiple clusters;
number-of-documents determination means for determining the number of documents belonging to each cluster;
appearance frequency calculating means for calculating a function value of an appearance frequency in each cluster for each of the extracted index terms;
per-cluster keyword point calculating means for dividing, for each cluster, the function value of the appearance frequency in each cluster for each of the index terms by the number of documents belonging to each cluster so as to calculate a per-cluster keyword point; and
entire-cluster keyword point calculating means for calculating, for each index term, the total value for the entire clusters of the calculation results by the per-cluster keyword point calculating means.

Generally, a document frequency (DF), a global frequency (GF), a total document IDF weighted global frequency (GFIDF) and the like are used as indexes for evaluating weights of index terms extracted from a document group, but these conventional indexes are not sufficient for evaluating whether the index terms express the overall characteristics of the document group. A document group can be classified into several clusters of documents having high commonality, but the number of documents and other factors vary by cluster. If an attempt is made to evaluate the index terms by treating all of the documents belonging to the clusters equally, the evaluation will be skewed toward influential clusters, so there may be instances where an index term that expresses the overall characteristics of the document group cannot be highly evaluated.

For example, if there are index terms that are frequently used in a cluster, the larger the cluster, the more easily the document frequency and global frequency increase. However, even if the document frequency and global frequency are high, if the index terms are not used by other clusters, those index terms cannot be said to express the overall characteristics of the document group.

The present invention classifies the technical document group of the subject company and reflects the importance in each cluster to the overall evaluation regardless of the number of documents in each cluster; thereby appropriately evaluate index terms that express the overall characteristics of the document group without skewing towards a particular cluster. Using this keyword evaluation makes it possible to extract the important technical elements of the subject company.

This also makes it possible to easily and appropriately analyze the technical characteristics of the subject company.

(2) It is desirable for the company technical document group analysis supporting device to further comprise:

intra-cluster high-rank term determination means for determining for each cluster whether each index term is within an upper prescribed number for the function value of the appearance frequency in each cluster;

wherein the per-cluster keyword point calculating means divides, for each cluster, the function value of the appearance frequency in each cluster for each of the index terms within the upper prescribed number for the function value of the appearance frequency by the number of documents belonging to each cluster so as to calculate the per-cluster keyword point.

In evaluating the index term by totaling the per-cluster keyword points for entire clusters, if the evaluation is skewed toward influential clusters, it may not be possible to highly evaluate the index terms that express the overall characteristics of the document group.

For example, if the number of frequently appearing terms in a cluster is greater than in other clusters, even if the index terms which do not have a high importance ranking within that cluster, the degree of an appearance frequency in that cluster could have a high effect on the degree of a document frequency or a global frequency. However, index terms that do not have a high importance ranking in the cluster cannot be said to express the characteristics of that cluster.

By calculating the keyword points in each cluster for just the high rank terms in the cluster, it is possible to reflect the importance in each cluster to the overall evaluation regardless of the number of frequently appearing terms in each cluster and to appropriately evaluate index terms that express the overall characteristics of the document group without skewing towards a particular cluster.

(3) It is also desirable for the company technical document group analysis supporting device to further comprise:

suitableness calculating means for dividing for each cluster the average of the appearance frequency in the cluster of a prescribed number of index terms that are highly evaluated through the function value of the appearance frequency by the number of documents within the cluster so as to calculate a keyword suitableness;

wherein the per-cluster keyword point calculating means multiplies the keyword suitableness by the results of dividing the function value of the appearance frequency by the number of documents belonging to each cluster so as to calculate the per-cluster keyword point.

In evaluating the index term by totaling the per-cluster keyword points for entire clusters, even if, for example, the document frequency or the term frequency in one cluster is high, if this cluster contains a variety of dissimilar documents, this index term cannot be said to be important terms for the entire document group. Here, a measure of keyword suitableness for each cluster was added in order to highly evaluate an index term if this index term appears in many clusters and the cluster in which this index term appears is large and coherent.

(4) In addition, another company technical document group analysis supporting device of the present invention comprises:

index term extraction means for extracting index terms from a multiple-field document group of a subject company including technical documents of multiple fields;
clustering means for classifying the multiple-field document group of the subject company under given conditions to obtain multiple clusters;
number-of-documents determination means for determining the number of documents belonging to each cluster;
appearance frequency calculating means for calculating a function value of an appearance frequency of each of the extracted index terms in each cluster;

intra-cluster high-rank term determination means for determining for each cluster whether each index term is within an upper prescribed number of the function value of the appearance frequency in each cluster;

per-cluster keyword point calculating means for dividing, for each cluster, the function value of the appearance frequency in each cluster for each of the index terms within the upper prescribed number for the function value of the appearance frequency by the number of documents belonging to each cluster so as to calculate a per-cluster keyword point;

entire-cluster keyword point calculating means for calculating, for each index term, the total value for the entire clusters of the calculation results by the per-cluster keyword point calculating means;

keyword extraction means for extracting a keyword based on the calculated entire-cluster keyword points;

specific-field document group extraction means for extracting a specific-field document group from a multiple-field document group of the subject company and other company including technical documents of multiple fields based on the extracted keyword;

relative share calculating means for dividing the number of documents of a specific-field document group of the subject company, which is a document group of the subject company in the extracted specific-field document group, by the number of documents of a specific-field document group of the other company selected under given conditions from a document group of the other company in the extracted specific-field document group so as to calculate a relative share;

increase-rate calculating means for calculating a rate of increase of the number of documents per unit time in the specific-field document group of the subject company based on time information of each document belonging to the specific-field document group of the subject company; and

output means for outputting a combination of the relative share calculated by the relative share calculating means and the rate of increase calculated by the increase-rate calculating means.

A product portfolio management is known as a method for analyzing the business characteristics of a diversified company. This is used to calculate the share and rate of increase of the business in the respective fields and analyze the positioning in each field, but humans were needed to do the work of determining how to classify these fields. Trying to apply this means to the analysis of technical documents, such as patent documents, was difficult to do using human labor for the classification because of the large quantity of technical documents. The present invention automatically selects the keywords to represent the document group and conducts patent analysis to make it possible to analyze the relationship with other companies by selecting the important technical elements of the subject company and considering the temporal factor for the respective factors.

(5) It is desirable, for the company technical document group analysis supporting device, that the output means comprises visualization means for performing display by placing the relative share calculated by the relative share calculating means as a first axis of a coordinate system and the rate of increase calculated by the increase-rate calculating means as a second axis of the coordinate system.

This makes it possible to grasp at a glance the temporal factor of the subject company's technology and the relationship with other companies.

(6) It is also desirable, for the company technical document group analysis supporting device, that:

the given condition for selecting the specific-field document group of the other company in the relative share calculation is that it is a document group of a company, other than the subject company, with the greatest number of documents; and that

the output means outputs a magnitude relation between the relative share calculated by the relative share calculating means under the given condition and a relative share reference value calculated when the number of documents of the specific-field document group of the subject company and the number of documents of the specific-field document group of the other company are the same.

This makes it easy to grasp how far the technology of the subject company is from the second ranked and lower other companies or how far the technology of the subject company is from the other top ranked company.

(7) In addition, another company technical document group analysis supporting device of the present invention comprises:

document attribute extraction means for extracting document attributes of each document belonging to a technical document group;

clustering means for classifying the technical document group under given conditions to obtain multiple clusters;

evaluation value calculating means for calculating, for each cluster and each document attribute, an evaluation value based on a function value of an appearance frequency (DF or the like) of the document attributes in each cluster obtained through the classification;

maximum share calculating means for calculating for each cluster the sum of the evaluation values of each of the document attributes in each cluster for all of the document attributes extracted from the technical document group, then calculating for each cluster and each document attribute the ratio of the evaluation value of each document attribute to said sum, and then calculating for each document attribute the maximum value of said ratio in all clusters belonging to the technical document group so as to calculate a maximum share of each document attribute in the technical document group;

degree of concentration calculating means for calculating for each of the document attributes the sum of the evaluation values in each cluster for all the clusters belonging to the technical document group, then calculating for each cluster the ratio of the evaluation value in each cluster to said sum, then calculating the respective squares of said ratio, and then calculating the sum of the squares of said ratio for all of the clusters belonging to the technical document group so as to calculate a degree of concentration of the distribution of each document attribute in the technical document group; and

output means for outputting for each document attribute a combination of the maximum share calculated by the maximum share calculating means and the degree of concentration calculated by the degree of concentration calculating means.

The most generally used methods when evaluating the distribution of document characteristics in a document group are DF, GF, GFIDF and the like, but these evaluations cannot evaluate whether the distribution is broad across all clusters of the document group or it is skewed to a specific cluster, or whether it dominates within individual clusters. The present invention makes it possible to analyze the distribution within such document group and dominance within a cluster.

(8) In addition, another company technical document group analysis supporting device of the present invention comprises:

document attribute extraction means for extracting contents information of each document belonging to a technical document group of a subject company;

clustering means for classifying the technical document group of the subject company under given conditions to obtain multiple clusters;

evaluation value calculating means for calculating, for each cluster and each contents information, an evaluation value based on a function value of an appearance frequency (DF or the like) of the extracted contents information in each cluster obtained through the classification;

maximum share calculating means for calculating for each cluster the sum of the evaluation values of each of the extracted contents information in each cluster for all of the contents information extracted from the technical document group of the subject company, then calculating for each cluster and each contents information the ratio of the evaluation value of each contents information to said sum, and then calculating for each contents information the maximum value of said ratio in all clusters belonging to the technical document group of the subject company so as to calculate a maximum share of each contents information in the technical document group of the subject company;

degree of concentration calculating means for calculating for each of the extracted contents information the sum of the evaluation values in each cluster for all the clusters belonging to the technical document group of the subject company, then calculating for each cluster the ratio of the evaluation value in each cluster to said sum, then calculating the respective squares of said ratio, and then calculating the sum of the squares of said ratio for all of the clusters belonging to the technical document group of the subject company so as to calculate a degree of concentration of the distribution of each contents information in the technical document group of the subject company; and

output means for outputting for each contents information a combination of the maximum share calculated by the maximum share calculating means and the degree of concentration calculated by the degree of concentration calculating means.

The present invention makes it possible to analyze the distribution of the document attribute within the document group and dominance within a cluster. In particular, the contents information can be selected as the document attribute; therefore, when the document group is classified into multiple clusters, it is possible to analyze the degree of generality and specificity of each technical element of the subject company by extracting index terms with a high share (cluster explanation capability is high) in a specific cluster (evaluation of maximum share) or by extracting index terms that are concentrated (specific) in only a specific cluster or index terms that are distributed in many clusters (evaluation of degree of concentration to cluster).

(9) In addition, another company technical document group analysis supporting device of the present invention comprises:

document attribute extraction means for extracting person information (applicant, registrant or the like) of each document belonging to a technical document group;

clustering means for classifying the technical document group under given conditions to obtain multiple clusters;

evaluation value calculating means for calculating, for each cluster and each person information, an evaluation value based on a function value of an appearance frequency (DF or the like) of the extracted person information in each cluster obtained through the classification;

maximum share calculating means for calculating for each cluster the sum of the evaluation values of each of the extracted person information in each cluster for all of the person information extracted from the technical document group, then calculating for each cluster and each person information the ratio of the evaluation value of each person information to said sum, and then calculating for each person information the maximum value of said ratio in all clusters belonging to the technical document group so as to calculate a maximum share of each person information in the technical document group;

degree of concentration calculating means for calculating for each of the extracted person information the sum of the evaluation values in each cluster for all the clusters belonging to the technical document group, then calculating for each cluster the ratio of the evaluation value in each cluster to said sum, then calculating the respective squares of said ratio, and then calculating the sum of the squares of said ratio for all of the clusters belonging to the technical document group so as to calculate a degree of concentration of the distribution of each person information in the technical document group; and

output means for outputting for each person information a combination of the maximum share calculated by the maximum share calculating means and the degree of concentration calculated by the degree of concentration calculating means.

The present invention makes it possible to analyze the distribution within the document group of the document attribute and dominance within a cluster. In particular, the applicant can be selected as the document attribute; therefore, when the document group is classified into multiple clusters, it is possible to analyze the positioning of the subject company by analyzing who are the applicants with a high share (overwhelming other companies in some field) in a specific cluster (evaluation of the maximum share) or by analyzing who are the applicants that are concentrated (specific) in only a specific cluster or who are the applicants that are distributed in many clusters (evaluation of degree of concentration to cluster).

(10) It is desirable, for the company technical document group analysis supporting device, that the output means comprises visualization means for performing display by placing the degree of concentration calculated by the degree of concentration calculating means as a first axis of a coordinate system and the maximum share calculated by the maximum share calculating means as a second axis of the coordinate system.

This makes it possible to grasp at a glance the distribution of the document attribute within the document group and dominance within a cluster.

(11) In addition, another company technical document group analysis supporting device of the present invention comprises:

a database in which historical information is recorded for each document of a patent document group of a subject company including publications of unexamined patent applications and publications of allowed patents;

number-of-documents determination means for determining the "number of documents" belonging to the patent document group;

index calculating means for calculating multiple indexes for the patent document group based on the historical information recorded in the database;

patent impact calculating means for applying a specified weight to the "number of documents" of the patent document group so as to calculate a patent impact index;

historical information spatial distance calculating means for calculating a mean square of the indexes based on the historical information of the patent document group so as to calculate a historical information spatial distance index;

evaluation value calculating means for multiplying the patent impact index calculated by the patent impact calculating means by the historical information spatial distance index calculated by the historical information spatial distance calculating means so as to calculate an evaluation value; and

output means for outputting the evaluation value calculated by the evaluation value calculating means.

Since historical information of patent applications and registrations contain a variety of elements, it is not easy to extract useful information from the historical information of a patent document group. From studying the results of factor analysis on historical information, the inventors of the present invention concluded that in particular the two things obtained from the historical information are the "motivation to obtain rights" and the "ability to restrain other companies." The present invention further develops these to quantify the "motivation to obtain rights" and the "ability to restrain other companies" to provide useful information that cannot be measured using just the number of patents.

For example, even if the number of patents of the subject company in a certain field is less than that of another company, if the evaluation value calculated by the present invention is high, it is possible to evaluate that the subject company does not lose in terms of strength of the patents.

Additionally, within a document group of a certain company, for example, if a document group belonging to a certain field is compared with another document group belonging to another field, it is possible to make a comparison among the fields to evaluate the patent strategy of the company.

(12) In addition, another company technical document group analysis supporting device of the present invention comprises:

> a database in which time information and historical information are recorded for each document of a patent document group of a subject company including publications of unexamined patent applications and publications of allowed patents;
> clustering means for classifying the patent document group under given conditions to obtain multiple clusters;
> number-of-documents determination means for determining the "number of documents" belonging to each cluster;
> index calculating means for calculating multiple indexes for each cluster based on the representative value of the time information of the documents recorded in the database and the historical information of the documents recorded in the database;
> patent impact calculating means for applying for each cluster a specified weight to the "number of documents" so as to calculate a patent impact index;
> historical information spatial distance calculating means for calculating for each cluster a mean square of the indexes based on the historical information so as to calculate a historical information spatial distance index;
> evaluation value calculating means for multiplying for each cluster the patent impact index calculated by the patent impact calculating means by the historical information spatial distance index calculated by the historical information spatial distance calculating means so as to calculate an evaluation value; and
> output means for outputting for each cluster a combination of the evaluation value calculated by the evaluation value calculating means and the representative value of the time information calculated by the index calculating means.

The present invention quantifies the "motivation to obtain rights" and the "ability to restrain other companies" to provide useful information that cannot be measured using just the number of patents.

The evaluation value obtained from the historical information tends to be higher along with the time passes since application. Here, the present invention does not only calculate the evaluation value for each cluster constituting the patent document group, but also enable to review it with, for example, the average value of application dates. This makes it possible to consider that a newer document group is a stronger patent group even if the evaluation values are the same. Further, conversely, this also makes it possible to consider that an older document group is not so strong document group and to appropriately analyze the patent strength and other factors of the subject company in each field. For example, if a high evaluation value is assigned to a relatively new document group, it can be considered that the field is one in which the subject company has been concentrating on recently.

(13) In addition, another company technical document group analysis supporting device of the present invention comprises:

> a database in which a patent document group of a subject company and other companies including publications of unexamined patent applications and publications of allowed patents is recorded and in which time information and historical information for each document of a patent document group of the subject company are recorded;
> clustering means for classifying the patent document group of the subject company and other companies under given conditions to obtain multiple clusters;
> number-of-documents determination means for determining the "number of documents" belonging to each cluster and the "number of documents" of a patent document group of the subject company belonging to each cluster;
> index calculating means for calculating multiple indexes for each patent document group of the subject company belonging to each cluster based on the representative value of the time information of the documents recorded in the database and the historical information of the documents recorded in the database;
> patent impact calculating means for applying, for each patent document group of the subject company belonging to each cluster, a specified weight to the "number of documents" of each patent document group of the subject company belonging to each cluster so as to calculate a patent impact index;
> historical information spatial distance calculating means for calculating, for each patent document group of the subject company belonging to each cluster, a mean square of the indexes based on the historical information so as to calculate a historical information spatial distance index;
> evaluation value calculating means for multiplying, for each patent document group of the subject company belonging to each cluster, the patent impact index calculated by the patent impact calculating means by the historical information spatial distance index calculated by the historical information spatial distance calculating means so as to calculate an evaluation value;

intra-cluster share calculating means for calculating for each cluster the ratio of the "number of documents" of the patent document group of the subject company belonging to the cluster to the "number of documents" belonging to the cluster so as to calculate a share in cluster; and

output means for outputting for each cluster a combination of the evaluation value calculated by the evaluation value calculating means, the representative value of the time information calculated by the index calculating means, and the share in cluster calculated by the intra-cluster share calculating means.

The present invention quantifies the "motivation to obtain rights" and the "ability to restrain other companies" to provide useful information that cannot be measured using just the number of patents. Further, comparing this with, for example, the average value of application dates makes it possible to appropriately analyze the patent strength in each field of the subject company.

In addition, it is possible to make a quantitative comparison with other companies by calculating the number of documents share of the subject company.

(14) It is desirable, for the company technical document group analysis supporting device, that the output means comprises visualization means for performing display by placing the representative value of the time information of the documents belonging to each cluster as a first axis of a coordinate system and the evaluation value of the cluster calculated by the evaluation value calculating means as a second axis of the coordinate system.

This makes it possible to see at a glance the strength of the subject company's patents from the view point of historical information.

(15) It is desirable for the company technical document group analysis supporting device, that:

the database records at least "the number of other company citations and/or the number of oppositions or invalidation trials," "whether an examination was requested," and "whether a patent was granted" as the historical information of each document;

the index calculating means calculates "the total number of other company citations and/or the total number of oppositions or invalidation trials," "examination request ratio," "patent grant ratio," and other indexes as indexes based on the historical information;

the patent impact calculating means applies a weight calculated from "the total number of other company citations and/or the total number of oppositions or invalidation trials" to the "number of documents" so as to calculate the patent impact index; and

the historical information spatial distance calculating means calculates the mean square of the "examination request ratio," "patent grant ratio" and other indexes so as to calculate the historical information spatial distance index.

By using "the number of other company citations and/or the number of oppositions or invalidation trials," "whether an examination was requested," and "whether a patent was granted" as the historical information, it is possible to appropriately evaluate the "motivation to obtain rights" and the "ability to restrain other companies" of the subject company.

(16) In addition, the present invention is a company technical document group analysis supporting method that comprises the same process as the method that is executed by the devices and a company technical document group analysis supporting program that makes it possible to execute a computer the same process as the process executed by the devices. This program may be recorded on recording medium, such as FD, CDROM, and DVD, and may be transmitted or received via a network.

Effects of the Invention

The present invention automatically analyzes the technical document group to make it possible to easily and appropriately evaluate the technical characteristics of the subject company.

BRIEF DESCRIPTION OF THE DRAWINGS

FIG. 1 is a diagram showing a hardware configuration of a company technical document group analysis supporting device according to one embodiment of the present invention.

FIG. 2 is a flow chart showing an operation procedure of a processing device 1 of the company technical document group analysis supporting device.

FIG. 3 is a flow chart showing a keyword point calculating procedure of Example 1.

FIG. 4 is a flow chart showing a portfolio map creation procedure of Example 2.

FIG. 5 is a graph showing an output example (portfolio map) of the Example 2.

FIG. 6 is a graph showing an actual output example (portfolio map) of the Example 2.

FIG. 7 is a flow chart showing a characteristics map creation procedure of Example 3.

FIG. 8 is a graph showing an output example (index term characteristics map) of Example 3.

FIG. 9 is a graph showing an output example (applicant characteristics map) of Example 3.

FIG. 10 is a graph showing an actual output example (index term characteristics map) of Example 3.

FIG. 11 is a graph showing another actual output example (applicant characteristics map) of Example 3.

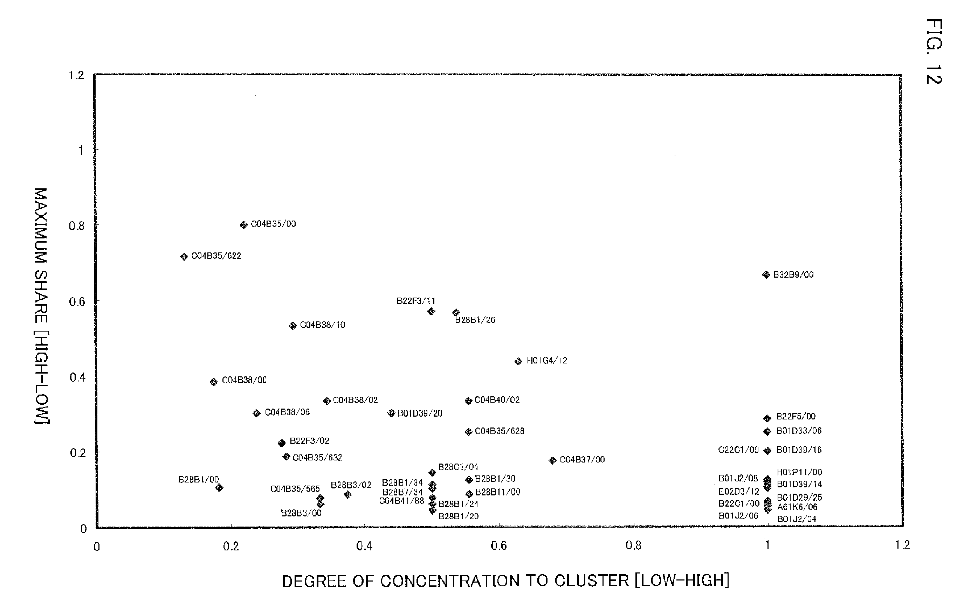

FIG. 12 is a graph showing a further actual output example (IPC characteristics map) of Example 3.

FIG. 13 is a flow chart showing a cluster position map creation procedure of Example 4.

FIG. 14 is a graph showing an output example (cluster position map) of Example 4.

FIG. 15 is a graph showing an actual output example (cluster position map) of Example 4.

FIG. 16A is an explanatory illustration for the method for generating clusters of a subject company and other companies.

FIG. 16B is an explanatory illustration for the method for generating the clusters of the subject company and other companies.

FIG. 16C is an explanatory illustration for the method for generating the clusters of the subject company and other companies.

FIG. 16D is an explanatory illustration for the method for generating the clusters of the subject company and other companies.

FIG. 17 is a graph showing a competition analysis example of Example 4.

FIG. 18 is a graph showing another competition analysis example of Example 4.

FIG. 19 is a graph showing a further competition analysis example of Example 4.

Description of Numerical Symbols

1: Processing device, 2: Input device, 3: Recording device, 4: Output device, 100: Technical document group reading unit, 200: Intra-document-group document attribute extraction unit, 300: Document attribute evaluation value calculation unit, 400: Company technical document group analysis data calculation unit

BEST MODE FOR CARRYING OUT THE INVENTION

Hereinafter, embodiments of the present invention will be described with reference to accompanying drawings.

(1. Explanation of Symbols, etc.)

The following symbols have been defined for simplifying the explanation in the below.

E: A technical document group of a specific or nonspecific technical field(s) and of a specific or nonspecific company (s). A symbol $m(E)$ represents the number of index terms extracted from this document group. Further, $N(E)$ represents the number of documents in this document group. Further, $n(E)$ represents the number of clusters generated by clustering this document group.

When especially noting a company, a subscript character is added, such as $E_X$ (a technical document group that includes documents of the subject company to be analyzed and documents of other companies), $E_A$ (a technical document group of the subject company to be analyzed), and $E_B$ (a technical document group of a company selected under given conditions from companies other than the subject company to be analyzed).

When especially noting a technical field, a subscript character is added, such as $E_1$ (a technical document group belonging to field No. 1), $E_2$ (a technical document group belonging to field No. 2), and $E_M$ (a multiple-field technical document group that includes documents belonging to field No. 1 and documents belonging to field No. 2).

When especially noting both a company and a technical field, subscript characters are added, such as $E_{XM}$ (a technical document group that includes documents of the subject company to be analyzed and documents of other companies and includes the technologies of multiple fields), $E_{A1}$ (a technical document group belonging to field No. 1 of the subject company to be analyzed).

$C_i$: Each cluster obtained by clustering a technical document group. $N(C_i)$ represents the number of documents belonging to each cluster. "i" is the cluster number and, for example, if the above document group $E_A$ of the subject company is clustered, $i = 1, 2, ..., n(E_A)$.

$D_j$: Each document included in a document group. "j" is the document number and, for example, for the above document group $E_A$ of the subject company, $j = 1, 2, ..., N(E_A)$.

$w_k$: An index term extracted from the document group. "k" is the index term number and, for example, if index terms are extracted for the above document group $E_A$ of the subject company, k = 1, 2, ..., $m(E_A)$.

a $(w_k, C_i)$ : An evaluation value for index term $w_k$ in cluster $C_i$. This value is calculated for each index term and for each cluster and, for example, for the above-mentioned document group $E_A$ of the subject company, calculating the evaluation value in each cluster of each index term generates a matrix of $n(E_A) \times m(E_A)$. Examples for the evaluation values in cluster of an index term include document frequency (DF) in cluster, global frequency (GF) in cluster, all document IDF weighted global frequency in cluster (GFTDF), "Skey" discussed below and "keyword point" also discussed below, etc.

P: All documents that include the document group E. For all documents P, for example, if analyzing patent documents, approximately 6 million cases for all patent publications and utility model publications published during the recent 10 years in Japan are used.

IDF(P) or IDF(w, P): The logarithm of "the inverse of the document frequency (DF) in the all documents P $\times$ the total number of documents N(P) of the all documents P."

(2. Configuration of Company technical document group analysis supporting device)

FTG. 1 is a diagram showing a hardware configuration of a company technical document group analysis supporting device according to one embodiment of the present invention. As shown in this figure, the company technical document group analysis supporting device according this embodiment comprises a processing device 1 comprising a CPU (central processing unit) and a memory (recording device), an input device 2 that is input means such as keyboards (manual input apparatus), a recording device 3 that is recording means for storing document data, conditions, the processing results from the processing device 1, and other information, and an output device 4 that is output means for displaying, or printing, or otherwise outputting the extracted keywords, their evaluation values, and other information.

The processing device 1 comprises a technical document group reading unit 100, an intra-document-group document attribute extraction unit 200, a document attribute evaluation value calculation unit 300, and a company technical document group analysis data calculation unit 400.

The recording device 3 comprises a condition recording unit 31, a processing result storage unit 32, a document storage unit 33, etc. The document storage unit 33 contains document data obtained from an external database or an internal database. An external database means a document database, such as the IPDL electronic document library provided by the Japan Patent Office or PATOLIS provided by PATOLIS Corporation. In addition, an internal database includes such media as a marketed database with one's own stored data, such as Patent JP-ROM; a device that reads from such media as a FD (floppy disk), CD (compact disc) ROM, MO (magneto-optical disc), or DVD (digital versatile disc); and devices like OCR (optical character reading device) that read documents printed or written on paper and converts the read data into text or other electronic data.

As a communication means for exchanging signals and data among the processing device 1, input device 2, recording device 3, and output device 4, a direct connection such as a USB (universal serial bus) or a network such as LAN (local area network) can be used for transmission and reception, or a media storing documents, such as FD, CD-ROM, MO, or DVD can be used. Or part or several of these can be used in combination.

(2-1. Details of Input Device 2)

Next the configuration and functions of the above-mentioned company technical document group analysis supporting device is explained in detail.

The input device 2 receives such input as technical document group reading conditions, intra-document-group document attribute extraction conditions, attribute evaluation value calculation conditions, and company technical document group analysis data calculation conditions. These input conditions are sent to the condition recording unit 31 of the recording device 3 and stored therein.

(2-2. Details of Processing Device 1)

The technical document reading unit 100 reads a technical document group consisting of the multiple technical documents to be analyzed from the document storage unit 33 of the recording device 3 in accordance with the reading conditions input by the input device 2. The read technical document group data is directly sent to the intra-document-group document attribute extraction unit 200 and subjected to various processing or sent to the processing result storage unit 32 of the recording device 3 and stored therein.

Note that the data sent from the technical document group reading unit 100 to the intra-document-group document attribute extraction unit 200 or to the processing result storage unit 32 may be all of the data including contents data, time data, and historical information data of the read technical document group. In addition, it can also just be the bibliographic data that specifies each document of the technical document group (for example, an application number or a publication number for a patent document). In the case of the latter, the technical document data can be read again from the document storage unit 33 based on the bibliographic data when required for subsequent processing.

The intra-document-group document attribute extraction unit 200 extracts the document attribute data of each document (for example, such data as index terms, applicant, IPC, or historical information) from the technical document group read by the technical document reading unit 100. The extracted document attribute data is sent directly to the document attribute evaluation value calculation unit 300 where it is used for processing or is sent to the processing result storage unit 32 of the recording device 3 and stored therein.

The document attribute evaluation value calculation unit 300 calculates the evaluation value for each document attribute based on the document attribute data of each document extracted by the intra-document-group document attribute extraction unit 200. This evaluation value is the value that was evaluated for the document attributes by the document group unit read by the technical document group reading unit 100 or by the cluster unit obtained by classifying the document group under the given conditions. For example, when index term information is selected as the document attribute, the evaluation value will be a function value of an appearance frequency of an index term in the document group or the cluster. In addition, for example, when applicant information is selected as the document attribute for a patent document, the evaluation value will be the number of documents for an applicant in the document group or the cluster. In addition, for example, when patent application historical information is selected as the document attribute for a patent document, the evaluation value will be "the total number of oppositions or invalidation trials" or the "examination request ratio" in the document group or the cluster. The evaluation data in the document group or cluster of the calculated document attribute is sent directly to the company technical document group analysis data calculation unit 400 where it is used for processing or is sent to the processing result storage unit 32 of the recording device 3 and stored therein.

The company technical document group analysis data calculation unit 400 calculates the analysis data of the company technical document group based on the evaluation value in the document group or the cluster of the document attribute calculated by the document attribute evaluation value calculation unit 300. This company technical document group analysis data may include followings:

Keyword points calculated based on the index term evaluation value or keywords extracted based on the keyword points (Example 1);
A portfolio map showing the positioning of a document group of the subject company in a document group separately extracted based on the keywords of Example 1 (Example 2);
A degree of concentration and a maximum share of a document attribute calculated based on the document attribute evaluation value, or a characteristics map generated based on these (Example 3);
A document group cluster score calculated based on the historical information evaluation value, or a cluster position map generated based on this (Example 4);
A map taking cluster scores per cluster on a vertical axis and taking cluster scores per case on a horizontal axis for company clusters that are generated by classifying by company multiple mid-level clusters which are patent clusters of the subject company and other companies (Example 5);
A map taking a cluster score per cluster on a vertical axis and taking a cluster score per case on a horizontal axis for each of company clusters that is generated by dividing each patent cluster of the subject company and other companies into the subject company (one's own company) and all other companies (other companies) to generate two company clusters (Example 5); and
A diagram in which only cluster scores of company clusters of several companies including the subject company are output with multiple axes for each patent cluster of the subject company and other companies (Example 5).

The calculated company technical document group analysis data is sent to the processing results storage unit 32 of the recording device 3 and stored therein and then output by the output device 4 when necessary.

(2-3. Details of Recording Device 3)

In the recording device 3, the condition recording unit 31 records the conditions and other information acquired from the input device 2 and sends the required data based on the requests from the processing device 1. The processing result storage unit 32 stores the processing results of each component element of the processing device 1 and sends the required data based on the requests from the processing device 1. The document storage unit 33 stores and provides the required document data acquired from an external database or an internal database based on the requests from the input device 2 or the processing device 1.

(2-4. Details of Output Device 4)

The output device 4 outputs the company technical document group analysis data stored in the processing result storage unit 32 of the recording device 3 after being calculated by the company technical document group analysis data calculation unit 400 of the processing device 1. Output formats may include display on a display unit, printing to a printing medium such as paper, or sending to a computer device on a network via communication means.

(3. Operation overview of Company technical document group analysis supporting device)

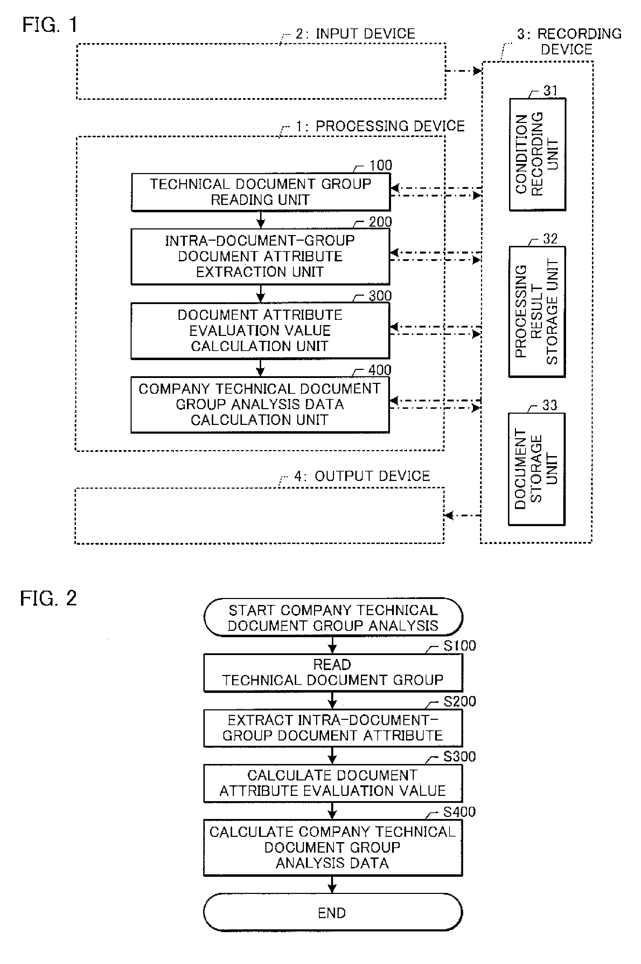

FIG. 2 is a flow chart showing the operation procedure of a processing device 1. of the company technical document group analysis supporting device.

First, in the technical document group reading unit 100, the technical document group is read from the document storage unit 33 of the recording device 3 (Step S100). The read technical document group may include a patent document group of the subject company, a specific-field document group among the patent document group of the subject company, a patent document group of the subject company and other companies, or a specific-field document group among the patent document group of the subject company and other companies. The patent document group of a specific company can be read by searching by the company name of the company. The specific-field patent document group can be searched by keywords, IPC codes or the like, or selected in the descending order of similarity (ascending order of dissimilarity) with a certain patent document.

Next, in the intra-document-group document attribute extraction unit 200, the document attribute data (index term, applicant, IPC, historical information, or other data for example) of each document is extracted from the technical document group read by the technical document group reading unit 100 (Step S200).

Next, in the document attribute evaluation value calculation unit 300, the evaluation value of each document attribute is calculated based on the document attribute data of each document extracted by the intra-document-group document attribute extraction unit 200 (Step S300).

Next, in the company technical document group analysis data calculation unit 400, the analysis data of the company technical document group is calculated based on the evaluation value in the document group or the cluster of the document attribute calculated by the document attribute evaluation value calculation unit 300 (Step S400). Specifically, the processing for each example is explained below.

(4. Example 1: Keyword point calculation and important technical element extraction)

Next, a first example of the present invention is explained. The first example calculates a keyword point explained below as an index for evaluating keyword of the technical document group to make it possible to extract an important technical element of the subject company.

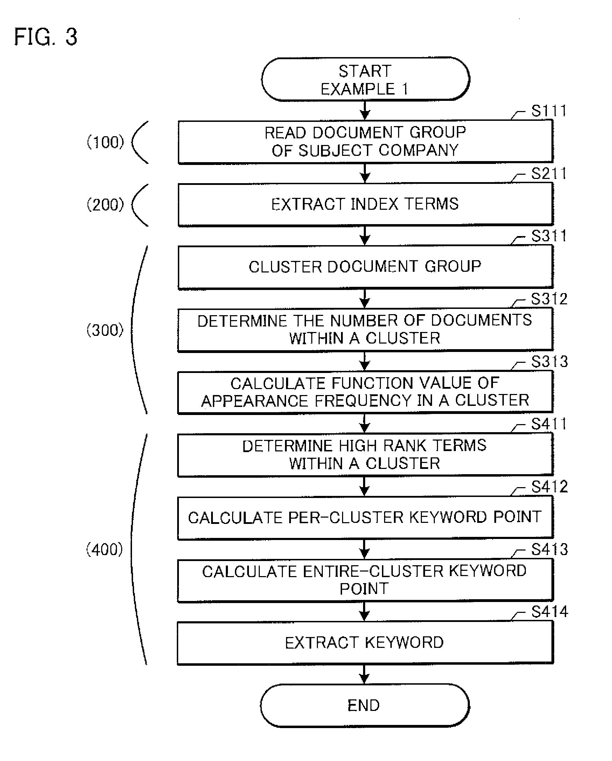

FIG. 3 is a flow chart showing a keyword point calculating procedure of Example 1.

(4-1. Reading document group of the subject company)

First, subject company document group read means of the technical document reading unit 100 reads the document group $E_A$ of the subject company consisting of the $N(E_A)$ number of technical documents $D_j$ (where j = 1, 2, ..., $N(E_A)$) from the document storage unit 33 of the recording device 3 (Step S111). Here, preferably patent documents of the subject company are read. Here, more preferably all of the patent documents of the subject company are read.

(4-2. Index Term Extraction)

Next, the index term extraction means of the intra-document-group document attribute extraction unit 200 extracts index terms $W_k$ (where k = 1, 2, ..., $m(E_A)$) as the document attribute of each document from the above-mentioned document group $E_A$ of the subject company (Step S211). For example, it calculates an appearance frequency (TF) of the index term appearing in each document and acquires the following data.

[Table 1]

| Index term / $w_k$ / Document $D_j$ | $w_1$ | $w_2$ | $w_3$ | $w_4$ | . . . | $w_{m(EA)}$ |
|---|---|---|---|---|---|---|
| $D_1$ | 9 | 6 | 1 | 4 | . . . | 5 |
| $D_2$ | 7 | 4 | 0 | 5 | . . . | 6 |
| $D_3$ | 4 | 7 | 1 | 2 | . . . | 3 |
| . . . | . . . | . . . | . . . | | | . . . |
| $D_{N(EA)}$ | 1 | 0 | 9 | 5 | . . . | 0 |

(4-3. Document Group Clustering)

Next, clustering means of the document attribute evaluation value calculation unit 300 classifies the document group $E_A$ of the subject company under the given conditions and acquires multiple clusters $C_i$ (where i = 1, 2, ..., n($E_A$)) (Step S311). The classification method is not limited in particular, and it is preferable for the classification to be performed based on the document contents. For example, it is possible to use a method that expresses each document $D_j$ belonging to the document group $E_A$ using m($E_A$) dimensional vectors, in which each component is an appearance frequency (TF) or the like of each index term $w_k$, and classifies the documents based on the degree of similarity or degree of dissimilarity between the vectors. Further, it is also possible to classify by the keywords that appear in each document or, if the document group $E_A$ is a patent document group, by the IPC (International Patent Classification) code or the like of each document. For example, it acquires the following data.

[Table 2]

| Cluster $C_i$ | Document $D_j$ |
|---|---|
| $C_1$ | $D_1$, $D_2$, $D_3$, $D_4$, $D_5$, $D_6$, $D_7$, $D_8$, $D_9$, $D_{10}$ |
| $C_2$ | $D_{11}$, $D_{12}$, $D_{13}$, $D_{14}$, $D_{15}$, $D_{16}$, $D_{17}$, $D_{18}$, $D_{19}$, $D_{20}$, $D_{21}$, $D_{22}$ |
| . . . | . . . |
| $C_{n(EA)}$ | $D_{23}$, $D_{24}$, $D_{25}$, $D_{26}$, $D_{27}$, $D_{28}$, $D_{29}$, $D_{30}$ |

(4-4. Determination of the Number of Documents within a Cluster)

Next, the number-of-documents determination means of the document attribute evaluation value calculation unit 300 determines the number of documents N($C_i$) belonging to each cluster $C_i$ (Step S312). The determination may be made by counting the number of documents in each cluster based on the classification results. In the example of the above table, data like the following can be obtained.

[Table 3]

| Cluster $C_i$ | The number of documents $N(C_i)$ |
|---|---|
| $C_1$ | 10 |
| $C_2$ | 12 |
| . . . | . . . |
| $C_{n(EA)}$ | 8 |

(4-5. Calculation of Function Value of Appearance Frequency in Cluster)

Next, appearance frequency calculation means of the document attribute evaluation value calculation unit 300 calculates a function value of an appearance frequency $a(w_k, C_i)$ as the evaluation value in each cluster $C_i$ for each index term $w_k$ (Step S313). As the appearance frequency of an index term in a cluster, there is a global frequency (GF) for example, but it is not limited to this. A document frequency (DF) or a function value that contains the global frequency or the document frequency as a variable may also be used. In a preferable example, $Skey(w_k, C_i)$ described below is used. $Skey(w_k, C_i)$ is a value obtained by compensating the all document IDF weighted GF (GFIDF) using degree of occurrence with base terms of the cluster. In particular, first, the base terms $g_h$ (h = 1, 2, ..., b) are defined as high frequency terms that appear frequently in the cluster and that degrees of occurrence with each index term in the cluster per unit document

$$C(w_j, w_k) = \Sigma_{\{D \in C\}} [DF(w_j, D) \times DF(w_k, D)]$$

are similar to each other. A degree of occurrence of a base g and an index term w per unit document is defined as

$$Co(w, g) = \Sigma_{\{w' \in g, w' \neq w\}} C(w, w').$$

Here w' is the high frequency term which is one of the bases g other than the index term w for which the degree of occurrence $Co(w, g)$ is measured. The degree of occurrence $Co(w, g)$ between the index term w and the base g is the total value of the degree of occurrence $c(w, w')$ with w for all w'. The following key(w) is calculated based on this degree of occurrence $Co(w, g)$:

$$key(w) = 1 - \Pi_{\{1 \leq h \leq b\}} [1 - Co(w, g_h)/F(g_h)]$$

Here, $F(g_h) = \Sigma_{\{w \in C\}} Co(w, g_h)$ is defined, namely the $F(g_h)$ is. the total value for all index terms w of the degree of occurrence $Co(w, g_h)$ between the index term w and the base $g_h$. Dividing $Co(w, g_h)$ by $F(g_h)$ and taking the difference with 1, multiplying this for all of the base $g_h$ and then again taking the difference with 1 gives the key(w).
Here, Skey(w) is calculated by the following formula.

$$Skey(w) = GF(w, C) \times [IDF(w, P) + \ln key(w)]$$

Note that GF(w, C) is the global frequency of the index term w within the cluster C.
Skey(w) increases the lower an appearance frequency in all documents P (the higher the IDF(P)), the higher an appearance frequency within the cluster C (the higher the GF(C)), and the higher the affinity of the term with the contents of the cluster occurring with the base term in the cluster (the higher the key(w)). Therefore, Skey is useful for evaluating the importance of the index term in the cluster.
For example, it acquires the following data and calculates the document attribute evaluation value.

[Table 4]

| Cluster $C_i$ | A function value a ($w_k$, $C_i$) of an appearance frequency of index term $w_k$ | | | | | | | |
|---|---|---|---|---|---|---|---|---|
| | $w_1$ | $W_2$ | $w_3$ | $w_4$ | $W_5$ | $W_6$ | ... | $w_{m(EA)}$ |
| $C_1$ | 22.3 | 10.2 | 14.5 | 4.5 | 5.7 | 3.9 | ... | 1.4 |
| $C_2$ | 13.5 | 17.6 | 4.6 | 18.9 | 2.5 | 4.2 | ... | 3.6 |
| - | - | - | - | - | - | - | - | |
| - | - | - | - | - | - | - | - | |
| - | - | - | - | - | - | - | - | |
| $C_{n(EA)}$ | 15.6 | 24.5 | 2.4 | 3.6 | 19.5 | 4.8 | ... | 2.5 |

(4-6. Determination of the High Rank Terms in a Cluster)

Next, intra-cluster high-rank term determination means of the company technical document group analysis data calculation unit 400 determines for each cluster $C_i$ whether each index term $w_k$ is within an upper prescribed number of terms for the function value a($w_k$, $C_i$) of the appearance frequency in each cluster $C_i$ (Step S411). The determination result is expressed as J ($W_k$, $C_i$). This J ($w_k$, $C_i$) is a variable that will be 1 for index terms in the upper prescribed number of terms in the cluster, and 0 for index terms not within the upper prescribed number of terms in the cluster. The upper prescribed number of terms can be but is not limited to being 10 terms. For example, in the example of the above table, it acquires the following data when determining whether the index term is the upper 3 terms.

[Table 5]

| Cluster $C_i$ | J ($w_k$, $C_i$) of index term $W_k$ | | | | | | | |
|---|---|---|---|---|---|---|---|---|
| | $w_1$ | $w_2$ | $w_3$ | $w_4$ | $w_5$ | $w_6$ | ... | $w_{m(EA)}$ |
| $C_1$ | 1 | 1 | 1 | 0 | 0 | 0 | ... | 0 |
| $C_2$ | 1 | 1 | 0 | 1 | 0 | 0 | ... | 0 |
| . | . | . | . | . | . | . | . | . |
| . | . | . | . | . | . | . | . | . |
| . | . | . | . | . | . | . | . | . |
| $C_{n(EA)}$ | 1 | 1 | 0 | 0 | 1 | 0 | ... | 0 |

(4-7. Per-Cluster Keyword Point Calculation)

Next, per-cluster keyword point calculating means of the company technical document group analysis data calculation unit 400 calculates per-cluster keyword points (Step S412). In other words, for each cluster $C_i$, the function value a($w_k$, $C_i$) of the appearance frequency in each cluster $C_i$ is divided by the number of documents N($C_i$) belonging to each cluster $C_i$ for each index term $w_k$ within the upper prescribed number of terms (J($w_k$, $C_i$) = 1) of the above-mentioned function value a($w_k$, $C_i$) of the appearance frequency. In particular,

$$J(w_k, C_i) \times a(w_k, C_i) / N(C_i)$$

is calculated for each index term $w_k$ and for each cluster $C_i$. This calculation results is to be called as per-cluster keyword point. Note that in this formula the above calculation is performed even for the index term $w_k$ not within the upper prescribed number of terms in the cluster $C_i$ (J($w_k$, $C_i$) = 0), but the keyword points for the cluster of such index term will always be 0.

(4-8. Entire-Cluster Keyword Point Calculation)

Next, entire-cluster keyword point calculating means of the company technical document group analysis data calculation unit 400 calculates the total value of the per-cluster keyword points for all clusters for each index term (Step

S413). In particular,

$$\Sigma_{i=1}^{n(A)} \{J(w_k, C_i) \times a(w_k, C_i) / N(C_i)\}$$

is calculated for each index term $w_k$. This calculation results is to be called as the entire-cluster keyword point. This entire-cluster keyword point is the total for all clusters of the evaluation value for each cluster, so that a high score is assigned to an index term appearing in more clusters with a higher evaluation value in each cluster. The above-mentioned all document IDF weighted GF (GFIDF), the above-mentioned Skey(w), in which a compensation is made for the GFIDF, or another function value of an appearance frequency can be used for the evaluation value for each cluster, but if there is a difference in influence among clusters, the terms appearing in clusters with large influence will be assigned a high score even if they do not appear in other clusters. Here, influence from the number of documents can be eliminated by dividing the function value of the appearance frequency by the number of documents in cluster N $(C_i)$. In addition, only totaling for the upper prescribed number of terms (terms where $J(w_k, C_i) = 1$) of each cluster eliminates the influence of the number of index terms. This makes it possible to assign a high score to index terms with a high evaluation value in many clusters.

(4-9. Keyword Extraction)

Next, keyword extraction means of the company technical document group analysis data calculation unit 400 extracts keywords based on the entire-cluster keyword point calculated for each index term $w_k$ (Step S414). For example, it is possible to extract index terms in which the entire-cluster keyword points are within the upper prescribed number. It is also possible to extract index terms for which the entire-cluster keyword points are the prescribed value or higher. Or, each index term $w_k$ may be assigned a category in advance, such as "term that expresses substance name," "term that expresses properties," "term that expresses application," or "term that expresses processing method" and recorded in a database, and the upper prescribed number of index terms may also be extracted for each category.

(4-10. Application example of Example 1)

In the above-mentioned Step S412 calculation of the keyword points for each cluster, the keyword suitableness $k(C_i)$ explained below may be multiplied by the result from dividing the above-mentioned function value $a(w_k, C_i)$ of the appearance frequency by the number of documents $N(C_i)$ or by the results from multiplying this by the high rank term determination results $J(w_k, C_i)$.

This keyword suitableness $k(C_i)$ is the result from extracting the constant number t of index terms $w_r$ (r = 1, 2, ..., t) highly evaluated for the function value $a(w_k, C_i)$ of the appearance frequency for each cluster $C_i$, then calculating a document frequency (DF) or another appearance frequency for the cluster $C_i$ of the index term $w_r$ and then dividing the average $(1/t)\Sigma_{r=1}^{t}DF$ of this by the number of documents $N(C_i)$ of the cluster. If the keyword suitableness $k(C_i)$ is high, it means the commonality among the documents belonging to the cluster is high and that the characteristics of the cluster can be expressed with a few keywords. Highly evaluating keywords extracted from a cluster with a high keyword suitableness makes it possible to extract the important elements of the document group of the subject company.

(5. Example 2: Portfolio Map)

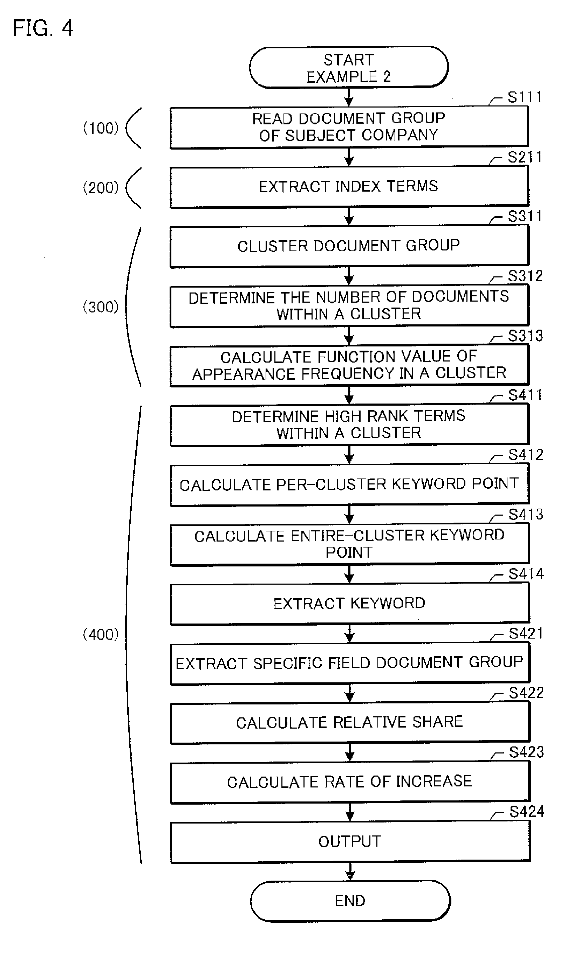

Next, a second example of the present invention is explained. The second example uses the keyword points of the first example to extract an important technical element of the subject company and then uses this important technical element to analyze the relationship with other companies while taking into consideration the temporal factor. FIG. 4 is a flow chart showing a portfolio map creation procedure of Example 2. The same symbols are attached as for the processing for FIG. 3 regarding Example 1 and detailed explanation thereof is omitted, so the explanation here is made to the points that differ from Example 1.

(5-1. Keyword Extraction)

First, by the processing up to Step S414, similar to the above-mentioned Example 1, the analysis on the document group $E_A$ of the subject company is made and then the keywords are extracted based on the entire-cluster keyword points. Here, the technical document group $E_A$ of the subject company in particular is a multiple-field document group made up of multiple fields.

(5-2. Specific-Field Document Group Extraction)

Next, specific-field document group extraction means of the company technical document group analysis data calculation unit 400 extracts a specific-field document group $E_{X1}$ from the multiple field document group $E_{XM}$ that includes the multiple field technical documents of the subject company and other companies (Step S421). In the case of Example 2 in particular, the specific-field document group $E_{X1}$ is extracted based on keywords which are extracted using the same method as for Example 1.

Here, if patent documents are to be analyzed, then the above-mentioned all documents P or an alternative can be used for the multiple field document group $E_{XM}$ on which the extraction is conducted.

If the above-mentioned extracted keywords are used as a search keys to search the multiple field document group $E_{XM}$ that includes the document groups of the subject company and other companies, the specific-field document group $E_{X1}$ can be obtained.

(5-3. Relative Share Calculation)

Next, relative share calculating means of the company technical document group analysis data calculation unit 400 calculates ratio (relative share) of the document group of the subject company to the document group of other company for the field (Step S422).

In particular, from the specific-field document group $E_{X1}$ containing the document group of the subject company and other companies, a specific-field document group $E_{A1}$ of the subject company, which is a document group of the subject company, is extracted and the number of documents $N(E_{A1})$ for this is calculated.

Further, a document group $E_{B1}$ of a company with the greatest number of documents belonging to the above-mentioned specific-field document group $E_{X1}$ among companies other than the subject company is selected from the specific-field document group $E_{X1}$ containing the document group of the subject company and other companies.

An $N(E_{A1})/N(E_{B1})$ obtained by dividing the number of documents $N(E_{A1})$ of the specific-field document group $E_{A1}$ of the subject company by the number of documents $N(E_{B1})$ of the specific-field document group $E_{B1}$ of other company is the share (relative share) of the specific-field document group $E_{A1}$ of the subject company.

(5-4. Increase-Rate Calculation)

Next, increase-rate calculating means of the company technical document group analysis data calculation unit 400 calculates rate of increase of the document group of the subject company for the field (Step S423). In particular, the rate of increase of the number of documents per unit time of the specific-field document group $E_{A1}$ of the subject company based on the time information T of each document belonging to the specific-field document group $E_{A1}$ of the subject company is calculated. For example, for the analysis of patent documents, if the specific-field document group $E_{A1}$ of the subject company is classified by year of application, year of publication, or year of registration and document groups for respective year $E_{A1(1)}$, $E_{A1(2)}$ are obtained (The numbers in parentheses show the year, and it is assumed that the lower the value, the farther back the year), it is possible to calculate the rate of increase per unit time from the number of documents of each year. Thus, the rate of increase of the number of documents can be calculated using

$$\{N(E_{A1(2)}) - N(E_{A1(1)})\} \, / \, N(E_{A1(1)}).$$

When the time information T of the specific-field document group $E_{A1}$ of the subject company covers 3 years or more, the rate of increase for each year may be calculated and then averaged.

(5-5. Output)

Next, the share of the specific-field document group $E_{A1}$ of the subject company and the rate of increase in the number of documents per unit time of the specific-field document group $E_{A1}$ of the subject company are combined by the output device 4 and output (Step S424). There is no particular limitation to the output method, and the combination of the share and the rate of increase can be displayed on a screen of display means, printed on paper, transmitted by telecommunications line, or other means.

It is preferable that visualization means displays the relative share on a first axis of a coordinate system and the rate of increase on a second axis of the coordinate system. The number of the specific-field document groups of the subject company to be displayed is not limited to only one. Analyses on multiple keywords can be made in the same way, so if the analysis results for the respective specific-field document groups $E_{A1}$, $E_{A2}$, $E_{A3}$, ... of the multiple fields of the subject company are displayed, a comparative analysis among the fields of the subject company can be performed.

Further, if the specific-field document group $E_{X1}$ containing the documents of the subject company and other companies is classified by year in advance and the same analysis as that mentioned above is performed and the analysis results for respective year document groups $E_{A1(1)}$, $E_{A1(2)}$, $E_{A1(3)}$, ... of the subject company are displayed, it is possible to analyze in greater detail the trend to show whether the document groups of the subject company are progressing or declining with the passage of time.

(5-6. Specific Example)

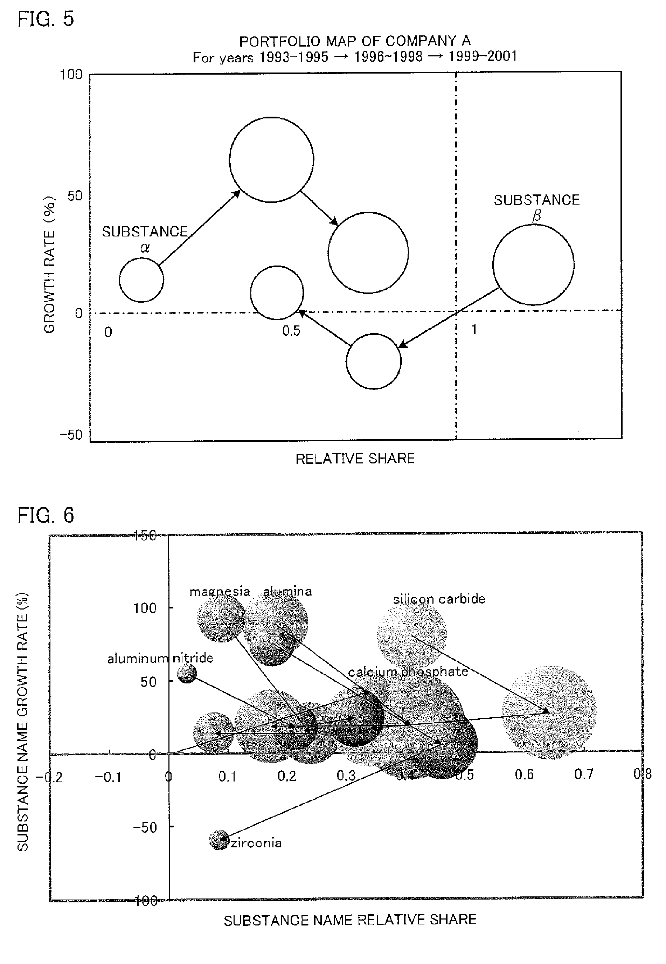

FIG. 5 is a graph showing an output example (portfolio map) of Example 2. Here, this shows the relative share on the horizontal axis, the growth rate on the vertical axis and the number of documents for each document group is shown by the size of the bubble respectively for document groups obtained by searching the patent document groups of the subject company by substance names and classifying by the respective given years. Arrows are attached to document groups with the same substance name but in different years from older document group to newer document group.

This graph shows a transition of the patent applications of the subject company for substance name $\alpha$ from a research period with a small share to a mature period with the declined rate of increase via a growth period with a high rate of increase and an expansion period. In addition, for the patent applications for substance name $\beta$ a transition is occurred from the mature period with a large share to a decline period with the lower rate of increase and small share and entering into the research period where there again is a research for new technology can be seen.

FIG. 6 is a graph showing an actual output example (portfolio map) of Example 2. This graph is created in the same manner as FIG. 5. From FIG. 6 it can be seen that for the substance name "zirconia" the rate of growth is slowing and has entered the decline period while for the substance name "aluminum nitride" has entered the growth period where the share is expanding.

(6. Example 3: Characteristics Map)

Next, a third example of the present invention is explained. The third Example makes it possible to analyze the technical positioning of the subject company by being able to evaluate whether the document attribute distribution of the document group is widely distributed over the all clusters in the document group, whether it is skewed to a specific cluster, or whether there is dominance within individual clusters, etc.

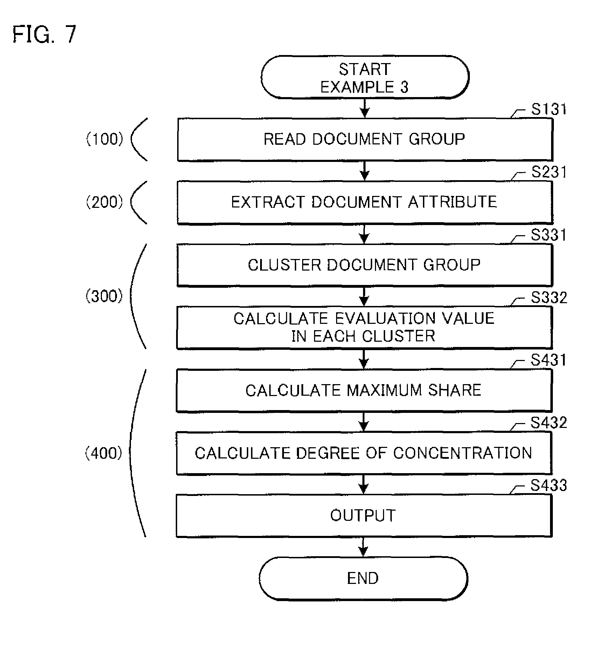

FIG. 7 is a flow chart showing a characteristics map creation procedure of Example 3.

(6-1. Reading Document Group)

First, document group read means of the technical document reading unit 100 reads the document group E consisting of the N(E) number of technical documents $D_j$ (where j = 1, 2, ..., N(E)) from the document storage unit 33 of the recording device 3 (Step S131).

The criteria for selecting the document group E can be freely chosen, but for example, documents related to the important technical element of the subject company that had a high keyword score in the overall technical document group of the subject company in Example 1 can be extracted again from all documents containing the document group of the subject company and other companies. Using the document group extracted in this manner makes it possible to analyze the important technical elements of the subject company in greater detail. Note that when selecting the document contents information, such as the index term or IPC, as the document attributes for the next step, it is preferable that only the document group of the subject company be used. When selecting person information, such as applicant, as the document attributes, it is preferable to use the document group of the subject company and other companies.

(6-2. Document Attribute Extraction)

Next, document attribute extraction means of the intra-document-group document attribute extraction unit 200 extracts the document attributes of each document $D_j$ (where j = 1, 2, ..., N(E)) belonging to the above-mentioned technical document group E (Step S231). The document attributes may be the index term $w_k$ of each document, and it is possible to select any document attribute such as keyword, applicant, or IPC subclass, according to which distribution in the technical document group E will be analyzed. The following shows the document attribute for the example of this example as $w_k$. For example, it acquires the following data.

[Table 6]

| Document $D_j$ | Document Attribute |
|---|---|
| $D_1$ | $w_1$, $w_2$, ... |
| $D_2$ | $w_1$, $w_3$, ... |
| $D_3$ | $w_3$, ... |
| . <br> . <br> . | . <br> . <br> . |
| $D_{N(E)}$ | $w_4$, ... |

(6-3. Document Group Clustering)

Next, clustering means of the document attribute evaluation value calculation unit 300 classifies the technical document group E under the given conditions and acquires multiple clusters $C_i$ (where i = 1, 2, ..., n(E)) (Step S331). The classification method is not limited in particular, but it is preferable for the classification to be performed based on the document contents. For example, it acquires the following data.

[Table 7]

| Cluster $C_i$ | Document $D_j$ |
|---|---|
| $C_1$ | $D_1$, $D_2$, $D_3$, $D_4$, $D_5$, $D_6$, $D_7$, $D_8$, $D_9$, $D_{10}$ |
| $C_2$ | $D_{11}$, $D_{12}$, $D_{13}$, $D_{14}$, $D_{15}$, $D_{16}$, $D_{17}$, $D_{18}$, $D_{19}$, $D_{20}$, $D_{21}$, $D_{22}$ |
| . <br> . <br> . | . <br> . <br> . |
| $C_{n(E)}$ | $D_{23}$, $D_{24}$, $D_{25}$, $D_{26}$, $D_{27}$, $D_{28}$, $D_{29}$, $D_{30}$ |

(6-4. Evaluation Value Calculation in each Cluster)

Next, evaluation value calculation means of the document attribute evaluation value calculation unit 300 calculates for each cluster $C_i$ and each document attribute $w_k$ the evaluation value $a(w_k, C_i)$ based on the function value of the appearance frequency of the above-mentioned document attribute $w_k$ for each cluster $C_i$ (Step S332). For example, if the document attribute $w_k$ is an index term, it is preferable that the above-mentioned Skey(w) be used as is, or Skey(w)/N($C_i$) be used. In addition, if the document attribute $w_k$ is the person information, such as applicant, it is preferable to use the number of appearing documents of each document attribute $w_k$ in each cluster $C_i$ (the number of documents from each applicant in each cluster $C_i$) or a weighted value on this in some manner. For example, the following data is acquired for each cluster $C_i$ and each document attribute $w_k$. Note that for the convenience of explanation, the number of kinds of document attributes m(E) = 5 and the number of clusters n(E) = 3 are used.

[Table 8]

| Cluster $C_i$ | Evaluation Value $a(w_k, C_i)$ of Document Attribute $w_k$ | | | | |
|---|---|---|---|---|---|
| | $w_1$ | $w_2$ | $w_3$ | $w_4$ | $w_5$ |
| $C_1$ | 4 | 2 | 10 | 0 | 4 |
| $C_2$ | 12 | 2 | 3 | 0 | 8 |
| $C_3$ | 4 | 4 | 5 | 2 | 0 |

(6-5. Maximum Share Calculation)

Next, maximum share calculating means of the company technical document group analysis data calculation unit 400 calculates maximum share of each document attribute $w_k$ for the technical document group E (Step S431). When index term is selected as the document attribute for this maximum share, the maximum share shows whether or not the index term may explain a certain field (cluster C) within the technical document group E. Or, when applicant is selected as the document attribute, the maximum share shows whether or not the applicant is overwhelmingly strong compared to other companies in a certain field (cluster C) within the technical document group E.

In particular, first, in each cluster $C_i$, for the evaluation value $a(w_k, C_i)$ of each document attribute $w_k$, the sum $\Sigma_{k=1}^{m(E)}a(w_k, C_i)$ for all document attributes $w_k$ appearing in the above-mentioned technical document group E is calculated, and then share

$$a(w_k,\ C_i)\ /\ \Sigma_{k=1}^{m(E)}a(w_k,\ C_i),$$

which is the ratio of the evaluation value $a(w_k, C_i)$ of each document attribute $w_k$ to the sum, is calculated. Then,

$$MAX\ \{a(w_k,\ C_i)\ /\ \Sigma_{k=1}^{m(E)}a(w_k,\ C_i)\}\ for\ all\ i,$$

which is the maximum value of this ratio in all clusters $C_i$ belonging to the above-mentioned technical document group E becomes the maximum share of the document attribute $w_k$.

When this is shown using the example in the above table, it gives the following, and the maximum share for each document attribute $w_k$ is determined.

[Table 9]

| | | Share $a(w_k, C_i)/\Sigma_{k=1}^{5}a(w_k, C_i)$ of Document Attribute $w_k$ | | | | |
|---|---|---|---|---|---|---|
| | | $w_1$ | $w_2$ | $w_3$ | $w_4$ | $w_5$ |
| Cluster $C_i$ | $C_1$ | 4/20 | 2/20 | 10/20 | 0/20 | 4/20 |
| | $C_2$ | 12/25 | 2/25 | 3/25 | 0/25 | 8/25 |
| | $C_3$ | 4/15 | 4/15 | 5/15 | 2/15 | 0/15 |
| Maximum Share | | 12/25 =0.48 | 4/15 =0.27 | 10/20 =0,50 | 2/15 =0.13 | 8/25 =0.32 |

(6-6. Degree of Concentration Calculation)

Next, degree of concentration calculating means of the company technical document group analysis data calculation unit 400 calculates the degree of concentration of each document attribute $w_k$ for the technical document group E (Step S432). This degree of concentration is the index for determining whether each document attribute is specialized in a certain field (cluster C) within the technical document group E or whether it is widely distributed within the technical document group E.

In particular, for the evaluation value $a(w_k, C_i)$ of each cluster $C_i$, the sum $\Sigma_{i=1}^{n(E)}a(W_k, C_i)$ for all clusters $C_i$ belonging to the above-mentioned technical document group E are calculated, and

$$a(w_k,\ C_i)\ /\ \Sigma_{i=1}^{n(E)}a(w_k,\ C_i),$$

which is the ratio of the evaluation value $a(w_k, C_i)$ of each document attribute $w_k$ to the sum, is calculated. Then,

$$\Sigma_{i=1}^{n(E)}\{a(w_k,\ C_i)\ /\ \Sigma_{i=1}^{n(E)}a(w_k,\ C_i)\}^2,$$

which is the square sum of this ratio in all clusters $C_i$ belonging to the above-mentioned technical document group E becomes the degree of concentration of the document attribute $w_k$ in the cluster. When this is shown using the example in the above table it gives the following, and the degree of concentration for each document attribute $w_k$ is calculated.

[Table 10]

| | | ratio of the evaluation value of document attribute $w_k$ to the sum $a(w_k,C_i)/\Sigma_{i=1}^3 a(w_k,C_i)$ | | | | |
| --- | --- | --- | --- | --- | --- | --- |
| | | $w_1$ | $w_2$ | $w_3$ | $w_4$ | $w_5$ |
| Cluster $C_i$ | $C_1$ | 4/20 | 2/8 | 10/18 | 0/2 | 4/12 |
| | $C_2$ | 12/20 | 2/8 | 3/18 | 0/2 | 8/12 |
| | $C_3$ | 4/20 | 4/8 | 5/18 | 2/2 | 0/12 |
| Degree of Concentration - | | (16+144 +16) /400=0.44. | (4+4+16) /64=0.38 | (100+9 +25)/ 324=0.41 | (0+0+4) /4=1.00 | (16+64 +0)/ 144=0.56 |

(6-7. Output)

Next, for each document attribute $w_k$, the output device 4 outputs a combination of the above-mentioned maximum share and the above-mentioned degree of concentration (Step S433). There is no particular limitation to the output method, and a combination of the maximum share and degree of concentration can be displayed on a screen of display means, printed on paper, transmitted by telecommunications line, or other means.
It is preferable that visualization means displays the degree of concentration on a first axis of a coordinate system and the maximum share on a second axis of the coordinate system.

(6-8. Specific Example)

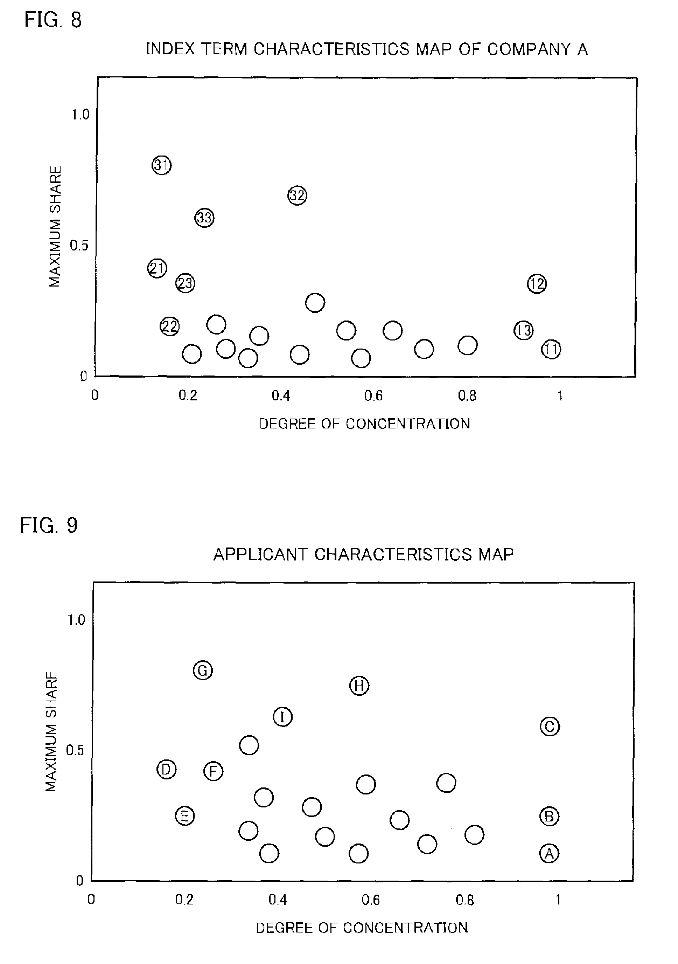

FIG. 8 and FIG. 9 are maps showing ah output example (characteristics map) of Example 3.
In FIG. 8, the patent document group of the subject company has been selected as the subject to be analyzed, index term has been selected as the document attribute, and the degree of concentration of each index term of the document group is shown on the horizontal axis and the maximum share is shown on the vertical axis. In this figure, index terms 11, 12, and 13 located on the right side of the map are the terms that appear in a concentrated manner in a specific-field of the document group, so it can be said that they are terms that are specialized in a specific field. Index terms 21, 22, 23, 31, and 33 located on the left side of the map are terms that are widely distributed in the document group, so it can be said that they are generally used terms. Further, index terms 31, 32, and 33 located at the top of the map are terms that appear in many documents of a certain field, so they can be said to be terms that explain the technical range of the subject company.
In FIG. 9, the a patent document group of the subject company and other companies in a certain technical field has been selected for analysis, applicant has been selected as the document attribute, and the degree of concentration of each applicant in the document group is shown on the horizontal axis and the maximum share is shown on the vertical axis. In this figure, applicants A, B, and C located on the right side of the map are the applicants that appear in a concentrated manner in a specific field of the document group, so it can be said that they are applicants that are specialized in a narrow specific field of the above-mentioned technical fields. Applicants D, E, F, and G located on the left side of the map are applicants that are widely distributed in the document group, so it can be said that they are applicants working on a broad range in the above-mentioned technical fields. Further, applicants C, G, H, and I located at the top of the map are applicants that appear in many documents of specific fields of the above-mentioned technical fields, so they can be said to be applicants with an overwhelming power over that of other companies in the specific field.

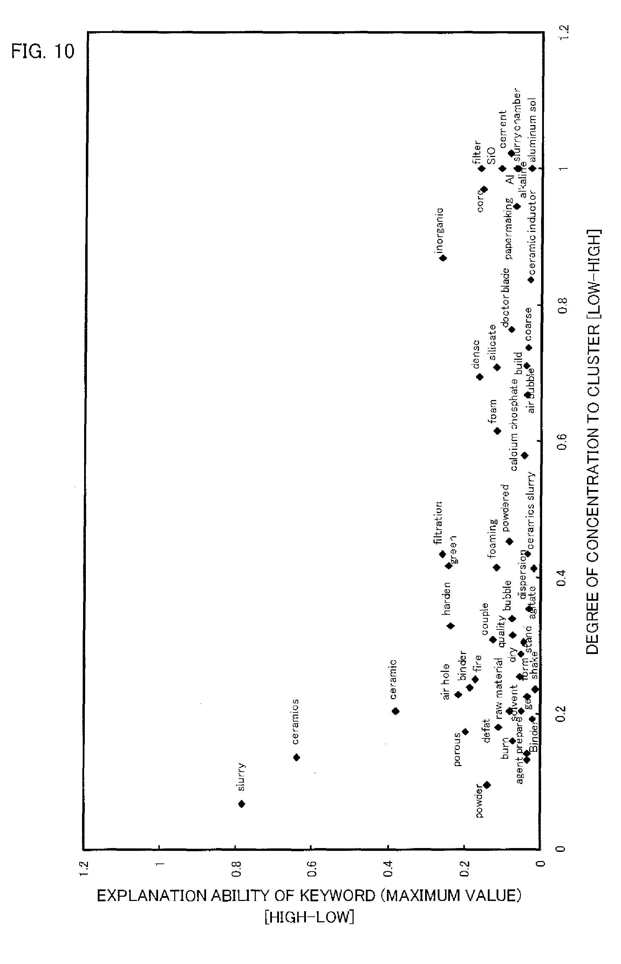

FIG. 10 is a map showing an actual output example. (index term characteristics map) of Example 3. The same analysis method as used in FIG. 8 is applied to a published document group of 300 cases relating to "foam slurry baking method," and the map creation method is also the same as that used for FIG. 8. In FIG. 10, it can be seen that the index terms "SiO," "cement," "alkaline," etc., located on the right side of the map are terms that appear in a concentrated manner in a specific field of the document group, so it can be said that they are terms that are specialized in a specific field. Index terms "powder" and "porous" located on the left side of the map are terms that are widely distributed in the document group, so it can be said that they are generally-used terms. Further, index terms "slurry" and "ceramic" located at the top of the map are terms that appear in many documents of certain fields, so they can be said to be terms that explain the technical range of the field. In this means the vertical axis of FIG. 10 can be said to show the explanation ability of the keyword.

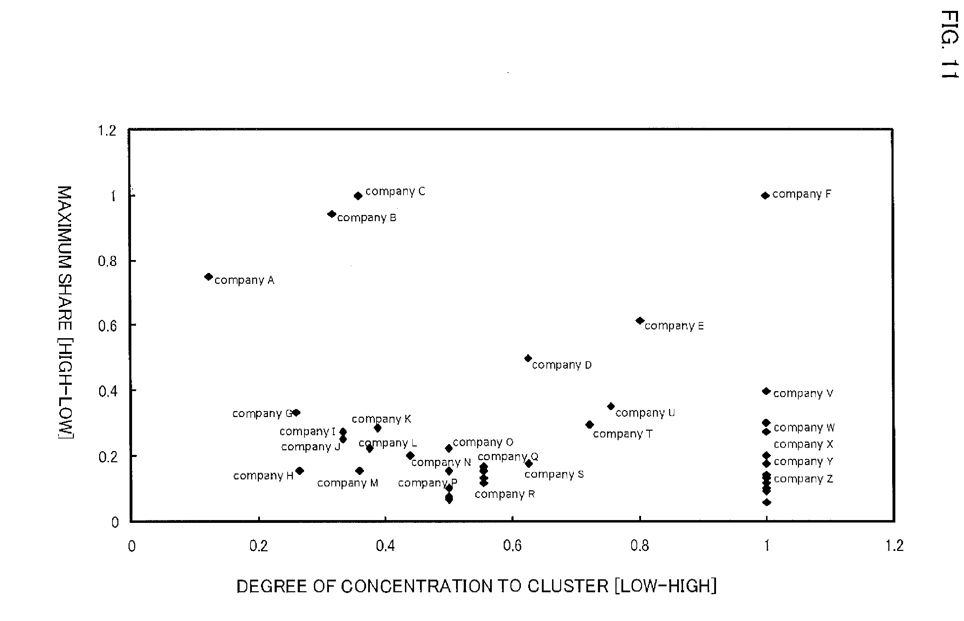

FIG. 11 is a map showing another actual output example (applicant characteristics map) of Example 3. The same analysis method as used in FIG. 9 is applied to a published document group of 300 cases relating to "foam slurry baking method," and the map creation method is also the same as that used for FIG. 9. However, "Company A," "Company B," etc., that show the company names do not show the same company as in FIG. 9. In FIG. 11, for example, applicants Company F, Company V, etc., located on the right side of the map are the applicants that appear in a concentrated manner in a specific field of the document group, so it can be said that they are applicants that are specialized in a narrow specific field of the above-mentioned technical fields. Applicants Company A, Company G, and Company H located on the left side of the map are applicants that are widely distributed in the document group, so it can be said that they are applicants working on a broad range in the above-mentioned technical fields. Further, applicants Company B and Company C located at the top of the map are applicants that appear in many documents of specific fields of the above-mentioned technical fields, so they can be said to be applicants with an overwhelming power over that of other companies in the specific field.

FTG. 12 is a map showing a further actual output example (IPC characteristics map) of Example 3. A published document group of 300 cases relating to "foam slurry baking method" has been selected for analysis, IPC has been selected as the document attribute, and the degree of concentration of each IPC of the document group is shown on the horizontal axis and the maximum share on the vertical axis. In the same figure, the IPC "C04B35/622," etc., located on the left side of the map is widely distributed in the document group and can be said to be a classification that explains the overall published document group for the analysis.

(7. Example 4: Cluster Score and Cluster Position Map)

Next, a fourth example of the present invention is explained. The fourth example makes it possible to analyze the characteristics of the patent groups of the subject company based on the historical information of the patent document group.

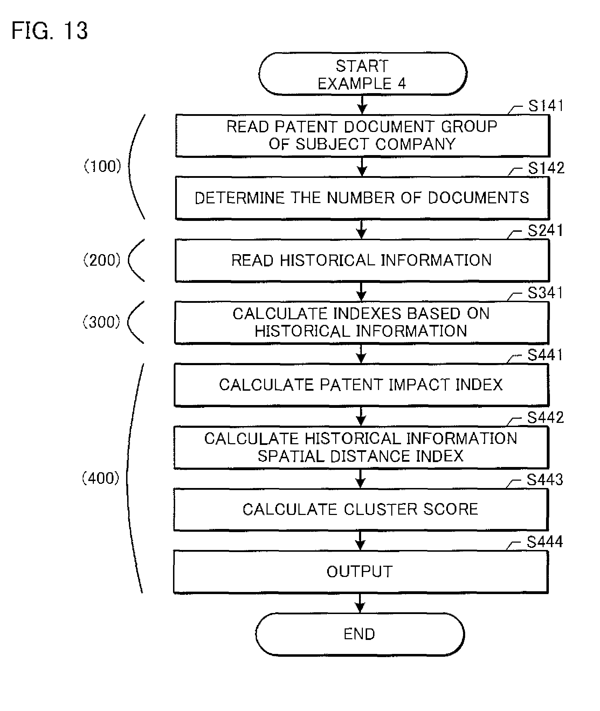

FIG. 13 is a flow chart showing a cluster position map creation procedure of Example 4.

(7-1. Reading Patent Document Group of the Subject Company)

First, subject company document group read means of the technical document reading unit 100 reads the patent document group $E_A$ of the subject company consisting of the publications of unexamined patent applications and the publications of allowed patents from the document storage unit 33 of the recording device 3 or from other databases (Step S141).

Just a part or all of the patent documents of the subject company may be read for analysis. The criteria for selecting the patent document group E of the subject company can be freely chosen and, for example, documents related to the important technical elements of the subject company that had a high keyword score in the overall patent document group of the subject company in Example 1 can be extracted again from all documents containing the document group of the subject company and other companies.

Comparing the patent document group $E_A$ of the subject company with the patent document group of the other companies makes it possible to analyze the important technical elements of the subject company in greater detail.

(7-2. Determination of the Number of Documents)

Next, number-of-documents determination means of the technical document group reading unit 100 determines the number of documents $N(E_A)$ of the above-mentioned patent document group $E_A$ of the subject company (Step S142). When both a publication of unexamined patent application and a publication of allowed patent are published for a certain patent application, it is preferable that the number of documents for the patent application be counted as 2 documents.

(7-3. Reading Historical Information)

Next, historical information read means of the intra-document-group document attribute extraction unit 200 reads the historical information from the document storage unit 33 of the recording device 3 or from another database as the document attributes of each document of the above-mentioned patent document group $E_A$ of the subject company (Step S241). The historical information of patent applications relating to each document is recorded in this database. Examples of historical information for each patent application are
"The number of other company citations" (0 or a positive integer),
"The number of oppositions or invalidation trials" (0 or a positive integer),
"Whether an examination was requested" (1 or 0),
"Whether a patent was registered" (1 or 0),
"Whether an expedited examination was requested" (1 or 0), and
"Whether an appeal was made against the examiner's decision" (1 or 0), but other information may also be used.

(7-4. Index Calculation Based on Historical Information)

Next, index calculating means of the document attribute evaluation value calculation unit 300 calculates multiple indexes based on the historical information recorded in the above-mentioned database as the evaluation value for the above-mentioned patent document group $E_A$ (Step S341).

Examples of this index are "The total number of other company citations," "The total number of oppositions or invalidation trials," "Examination request ratio," "Patent grant ratio," and also "Patent registration ratio," "Expedited examination request ratio," "The number of other company citations ratio," "The number of appeals ratio," and "The number of oppositions or invalidation trials ratio," but other indexes may be used. Each of the definitions is as follows:

"The total number of other company citations" = Total of "The number of other company citations" for patent document group $E_A$;

"The total number of oppositions or invalidation trials" = Total of "The number of oppositions or invalidation trials" for patent document group $E_A$;

"Examination request ratio" = The number of examination requests / The number of patent applications;

"Patent registration ratio" = The number of patent registrations / The number of patent applications;

"Patent grant ratio" = The number of patent registrations / The number of examination requests;

"Expedited examination request ratio" = The number of expedited examination requests / The number of examination requests;

"The number of other company citations ratio" = The total number of other company citations / The number of patent applications;

"The number of appeals ratio" = The number of appeals / The number of examination requests; and

"The number of oppositions or invalidation trials ratio" = "The total number of Oppositions or invalidation trials" / The number of patent registrations.

Note that of these definitions, the following can be thought of as shown below:

The number of examination requests is the total of "Whether an examination was requested" (1 or 0) for patent document group $E_A$;

The number of patent registrations is the total of "Whether a patent was registered" (1 or 0) for patent document group $E_A$;

The number of expedited examination requests is the total of "Whether an expedited examination was requested" (1 or 0) for patent document group $E_A$; and

The number of appeals is the total of "Whether an appeal was made against the examiner's decision" (1 or 0) for patent document group $E_A$.

(7-5. Calculation of Patent Impact Index)

Next, patent impact calculating means of the company technical document group analysis data calculation unit 400 applies the specified weight to "the number of documents" of patent document group $E_A$ to calculate the patent impact index (Step S441). The patent impact index attempts to evaluate the ability to restrain other company (degree of the ability to restrain other companies from obtaining rights to increase the value of a company's own patents) for patent document group $E_A$. So, for example, the specified weight is applied based on "The total number of other company citations" and/or "The total number of oppositions or invalidation trials" to "the number of documents," and the patent impact index is calculated using

```
patent impact index

=  "The number of documents" + "The total number of other company citations" + "The total number of oppositions or invalidation trials."
```

The weighting of "the number of documents" can be done by adding the value as in the above-mentioned formula, or by multiplying by any other ratio.

(7-6. Calculation of Historical Information Spatial Distance Index)

Next, historical information spatial distance calculating means of the company technical document group analysis data calculation unit 400 takes the mean square of indexes based on the historical information for the patent document group $E_A$ and calculates historical information spatial distance index (Step S442). The historical information spatial distance index attempts to evaluate the desire to secure rights (degree of the company's desires to acquire patent rights) for the patent document group $E_A$, so, for example, can be calculated by

$$\text{historical information spatial distance index}$$
$$= \sqrt{\{\Sigma_{\text{historical information index No.}=1}^{d} (\text{historical information index})^2 / d\}}.$$

More specifically, the mean square of the d number of historical information indexes, for example, the above-mentioned 7 indexes of "Examination request ratio," "Patent grant ratio," "Patent registration ratio," "Expedited examination request ratio," "The number of other company citations ratio," "The number of invalidation trials ratio," and "The number of oppositions or invalidation trials ratio" is taken, and then, the historical information spatial distance index can be calculated by taking the positive square root of this.

(7-7. Cluster Score Calculation)

Next, cluster score calculating means of the company technical document group analysis data calculation unit 400 calculates evaluation value of patent document group $E_A$ by multiplying the above-mentioned patent impact index by the above-mentioned historical information spatial distance index (Step S443). This evaluation value is to be called as the "cluster score." The cluster score has the following properties:
When "examination request ratio" = 0, in nearly all cases the historical information spatial distance index is 0, and as a result the cluster score is 0;
The historical information spatial distance index increases as the number of patent registrations increases. Further, if there are appeals against examiner's decision, oppositions to granting of patents or the like, these are taken into consideration; and
The patent impact index is a count of the number of publications, so this increases as the number of patent applications become greater, and further increases when a publication of allowed patent is issued. Further, this is weighted by "The total number of other company citations" and/or "The total number of oppositions or invalidation trials."
This cluster score can be used to evaluate the patent document group in terms of historical information to understand the patent strength that cannot be measured using the number of patents alone.

(7-8. Cluster Score Output)

Next, the output device 4 outputs the cluster score calculated for the patent document group $E_A$ (Step S444). There is no particular limitation to the output method, and the cluster score can be displayed on a screen of display means, printed on paper, transmitted by telecommunications line, or other means.
In the above explanation, one patent document group $E_A$ was the subject of the analysis, but the patent document group $E_A$ of the subject company may be classified under given conditions and each of the obtained clusters $C_i$ (i = 1, 2, ..., n $(E_A)$) may be the subject of the analysis to calculate the cluster score for each cluster $C_i$. The classification method is not limited in particular, but it is preferable for the classification to be performed based on the document contents.
Further, when the respective cluster scores are calculated for each cluster $C_i$, the representative values for the time information of the patent documents belonging to each cluster, for example, the average value, median value, mode value, etc., of the application date, publication date, registration date or the like of the patent documents belonging to each cluster may be calculated separately based on the time information of each document recorded in the database.
In addition, the cluster score calculated for each cluster $C_i$ and the representative value of the time information of each cluster are preferably output as a combination. The cluster score has a tendency to rise easily as the time information of the documents getting older, but clusters of new documents with a high cluster score can be evaluated as showing that the company has had a strong will to secure rights in recent years or is increasing its ability to restrain other companies.
In addition, the share in cluster may be calculated by classifying the patent document group $E_X$ of the subject company and other companies under given conditions and then taking the ratio of the number of documents $N(C_{i'})$ of the patent document group of the subject company to the number of documents N ($C_i$) of each obtained cluster $C_i$ (i = 1, 2, ..., n ($E_X$)) and output together with the share in cluster. Showing the share in a cluster of the subject company makes it easy to determine whether it is a strong or weak technical field for the subject company.

In particular, using visualization means to show the representative value of the time information for each cluster on a first axis of a coordinate system and the cluster score on a second axis of the coordinate system makes evaluation easier.

(7-9. Specific Example)

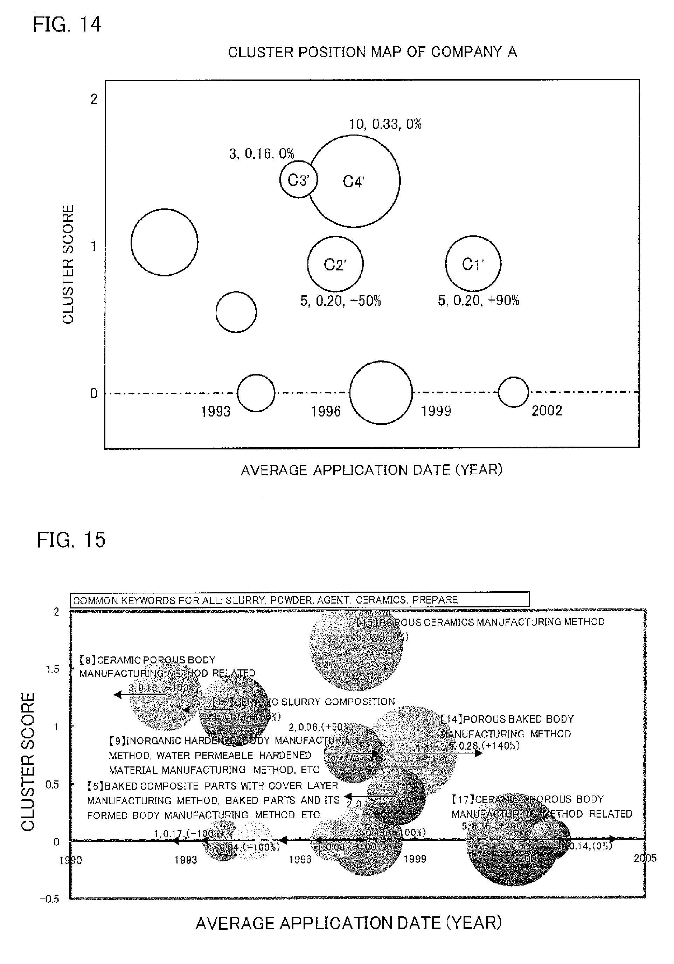

FIG. 14 is a map showing an output example (cluster position map) of Example 4. Here, the patent document group $E_X$ of the subject company and other companies was classified under given conditions and then, within the obtained each of clusters $C_i$ (i = 1, 2, ..., n($E_X$)), the collection of the patent documents of the subject company was made to be cluster $C_{i'}$ (i = 1, 2, ..., n($E_X$)), and then the cluster ($C_{i'}$) was taken as the subject to be analyzed. For each cluster $Ci'$, the average application date (year) is placed on the horizontal axis, the cluster score on the vertical axis, and the number of publication documents is shown by the size of the bubble. Further, the numerical values for the number of publication documents for each cluster $C_{i'}$, the share in cluster $N(C_{i'})/N(C_i)$, and the number of publication documents growth rate are shown in that order. In the same figure, cluster $C_{1'}$ is a new document group than cluster $C_{2'}$ while having the same cluster score as cluster $C_{2'}$, so it can be said that cluster $C_{1'}$ is a field in which the subject company may show strength in the future. Further, cluster $C_{3'}$ has a smaller share in cluster (based on the number of cases) than does cluster $C_{4'}$ while having the same cluster score as cluster $C_{4'}$, so it can be said that cluster $C_{3'}$ is a strong patent group.

FIG. 15 is a map showing an actual output example (cluster position map) of Example 4. The same analysis method as used in FIG. 14 was applied to a publication document group relating to "foam slurry baking method," and 19 clusters were obtained. This graph is created in the same manner as FIG. 14. However, in FIG. 15 the number of publication documents growth rate is shown by the length and direction of the arrow. In that figure, for example, it can be seen that the strength of cluster No. 15 "porous ceramics manufactures/manufacturing" is prominent.

(8. Example 5: Competition Analysis)

Next, a fifth example of the present invention is explained. The fifth example of the present invention is an analysis of the state of competition between the subject company and other companies by comparing the cluster scores of a subject company and other companies. The method for generating the clusters of the subject company and other companies is not limited, but can be performed as follows for example.

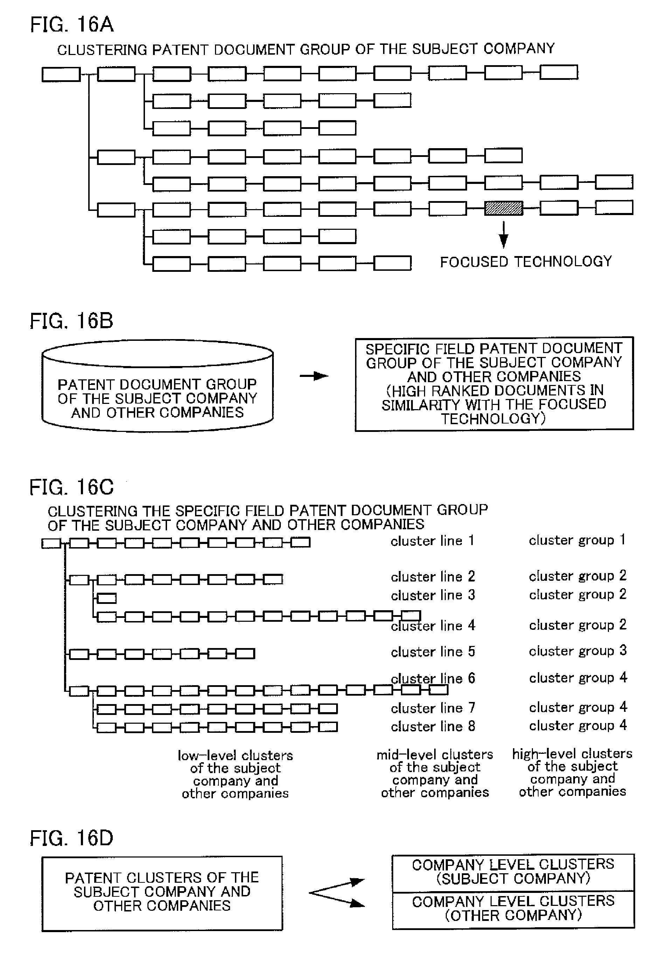

FIG. 16A through FIG. 16D are explanatory illustrations for the method for generating clusters of the subject company and other companies.

(A) First, a processing device 1 conducts processing of selecting focused technologies from the patent publication document group of the subject company. More particularly, the document attribute evaluation value calculation unit 300 of the processing unit 1 clusters the patent document group of the subject company, calculates the cluster score of each cluster (subject company cluster), and selects the subject company cluster with the highest cluster score as the focused technology (FIG. 16A).

(B) Next, the technical document group reading unit 100 extracts a document group (specific-field patent document group of the subject company and other companies) belonging to the "selected focused technology and technologies similar to the focused technology (specific technical field)" from the patent document group of the subject company and other companies including the publications of the subject company and other companies. More particularly, the document attribute evaluation value calculation unit 300 calculates the degree of similarity between each document of the patent document group of the subject company and other companies and the above-mentioned focused technology, and extracts the prescribed number of documents ranking at the top for the degree of similarity as a specific-field patent document group of the subject company and other companies (FIG. 16B). This makes it possible, for example, to make a comparison with other companies by selecting the important patent group from the patent group of the subject company. Further, extracting the specific-field document group makes it possible to assess the strengths and weaknesses of the subject company in the technical fields, including the important patent group of the subject company, based on comparisons with other companies.

(C) Next, the document attribute evaluation value calculation unit 300 clusters the extracted specific-field patent document group of the subject company and other companies. Here, the generated clusters (patent clusters of the subject company and other companies) are not limited to the lower-level clusters with a high degree of similarity among documents and may also include high-level clusters in which similarity between the low-level clusters is high or mid-level clusters that fall between them. FIG. 16C shows an example when 70 low-level clusters, 8 mid-level clusters (cluster line), and 4 high-level clusters (cluster group) are generated. Whether to use the low-level clusters or to use the mid-level or high-level clusters as the patent clusters of the subject company.and other companies may be selected depending on the analysis objective. This makes it possible, for example, to classify the specific-field patent document group of the subject company and other companies into segmented technology areas to assess the strengths and weaknesses of in each technology area of the subject company and other companies. Further, in addition to being able to assess the strengths and weaknesses of the subject company and other companies in the specific technology areas for each patent lower-level cluster of the subject company and other companies, it is also possible to assess the strengths and weaknesses of the subject company and other companies for the overall technical field, including the specific technology areas, for each of the patent mid-level and higher-level clusters of the subject company and other companies.

(D) Finally, the document attribute evaluation value calculation unit 300 further classifies each of the patent clusters of the subject company and other companies by company to obtain company level clusters that have been further segmented for each of the patent clusters of the subject company and other companies (Fig 16D)

(8-1. Extraction of Important Keywords by Level)

In (C) above, when generating the cluster groups or cluster lines, the document attribute evaluation value calculation unit 300 may extract the important keywords that form the respective common axes for each level of the technical field (specific-field patent document group of the subject company and other companies), cluster group, or cluster line. This makes it possible to directly show the characteristics technical contents in each level. Note that in this case in order to prevent the same important keywords from being extracted from the respective levels it is preferable that, for example, before extracting the important keywords from the cluster line, the keywords calculated for the cluster group be eliminated from use in the calculation, or that before extracting the important keywords from the cluster group, the keywords calculated for the technical field be eliminated from use in the calculation. An example of this calculation method is to extract the important keywords from the cluster line after calculating the important keywords for the cluster group as is explained in (1) to (7) below.

(1) Extract the main words for each cluster group based on the "Skey (corrected value of GFIDF by the degree of occurrence with the base word of the cluster)."

(2) Use the value of "Skey" of each main word as the numerator and the sum of the values of "Skey" of the extracted main words in the cluster group as the denominator to perform division so as to calculate the share in the cluster group for each main word for the respective cluster groups in which each main word appears.

(3) Comparing among all the cluster groups the values for the share in the cluster group for each main word calculated for each of the above-mentioned cluster groups makes it possible to show in which cluster groups the extracted words have a high share in cluster group by ranking them in order.

(4) The above-mentioned extracted main words are counted as candidates of "important keywords" only for the cluster group of which the result of the above-mentioned ranking among the cluster groups was within the top 3 ranks.

(5) The main words having a share in cluster group within the top 20 ranking within each cluster group from the main words counted as the candidate of "important keywords" are extracted as the "important keywords" of each cluster group.

(6) Next, before extracting the important keywords of the cluster line, the keywords that are the same as the important keywords of the cluster groups extracted by the step (5) above are first eliminated from the subject of count so that they are not extracted as important keywords in the cluster line.

(7) Then, the same calculation processing as in (1) to (5) above is performed to extract the important keywords from the cluster line.

Note that the method for extracting the important keywords of the technical field is the same as the important technical element extraction method of Example 1 and the explanation thereof is omitted here.

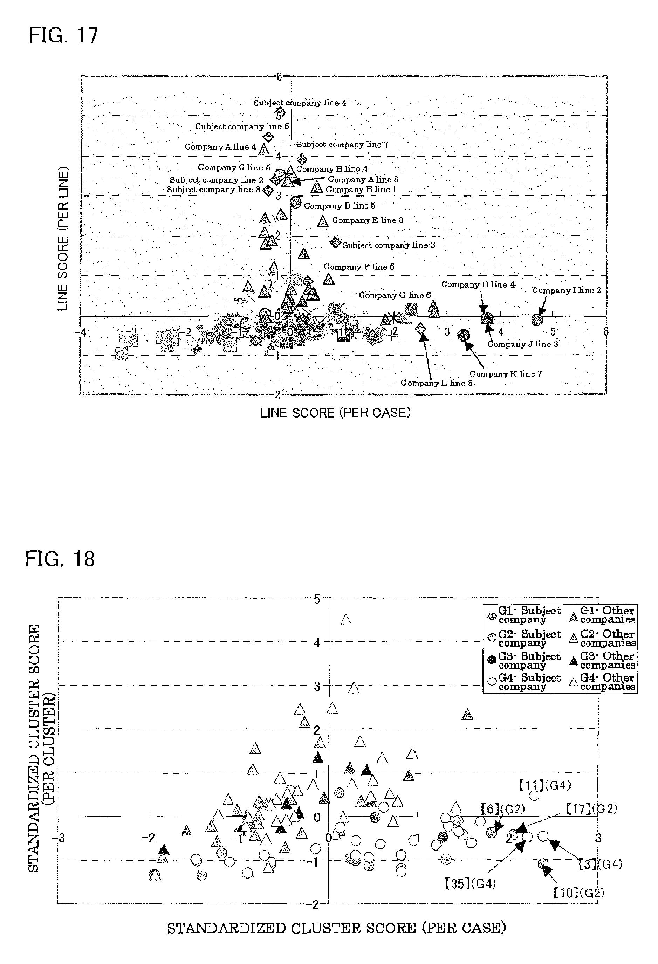

Hereinafter, an example for analyzing the strengths and weaknesses of the subject company and other companies based on the results from calculating the above-mentioned cluster score for each company for the subject company and other companies is explained while referring to FIG. 17 to FIG. 19.

FIG. 17 is a graph showing an example of competition analysis of Example 5. Here, an example of 8 mid-level clusters as the patent clusters of the subject company and other companies is shown. In particular, this shows an example where the document attribute evaluation value calculation unit 300 uses the 8 mid-level clusters ("Cluster Line" in FIG. 16C) as the patent clusters of the subject company and other companies, the generated mid-level clusters are classified by company to generate company-unit clusters, and then the cluster score is calculated by company. Also shown is an example where in addition to the above-mentioned cluster score per cluster, the document attribute evaluation value calculation unit 300 also calculates the cluster score per case (average) by dividing by the number of publication documents belonging to each company-unit cluster. Further, for each company-unit cluster, the company technical document group analysis data calculation unit 400 generates map information by placing the cluster score per cluster on the vertical axis and the cluster score per case on the horizontal axis and then outputs, this generated map information via_an output device 4. Note that here the cluster score is the cluster score by company for the mid-level cluster (cluster line), so in FIG. 17 the "line score" is shown.

In this map, if the vertical axis and horizontal axis values are positive, they show the strong areas of each company for the company-unit clusters, and if the vertical-axis and horizontal axis values are negative, they show the weak areas of each company for the company-unit clusters. This makes it possible to compare the same technical fields of the subject company and other companies to clearly show the strengths and weaknesses of the subject company and other companies.

Note that of the plot of each company for the above-mentioned subject company and companies other than the subject company, it is good to give priority to appending character information to the cluster score plot of the subject company. For the company plots for companies other than the subject company, a plot that is far from the origin and is positioned in the first or third quadrant may be freely selected for appending character information, but the character information may also be automatically appended by setting a threshold for the cluster score value.

FIG. 18 is a graph showing another example competition analysis of Example 5. Here, an example of 70 lower-level clusters as the patent clusters of the subject company and other companies is shown. In particular, this shows an example of calculation where the document attribute evaluation value calculation unit 300 divides each patent cluster of the subject company and other companies into the patents of the subject company and the patents of the other companies to generate two company-unit clusters and standardizes them so that the respective cluster scores have an average of 0 and variance of 1. Also shown is an example where in addition to the above-mentioned cluster score per cluster, the document attribute evaluation value calculation unit 300 also calculates the cluster score per case (average) by dividing by the number of publication documents belonging to each company-unit cluster. Further, for each company-unit cluster, the company technical document group analysis data calculation unit 400 generates map information by placing the cluster score per cluster on the vertical axis and the cluster score per case on the horizontal axis and then outputs this generated map information via an output device 4. In this example, both the patent lower-level cluster of the subject company and other companies to which the company-unit cluster belongs and the patent higher-level cluster of the subject company and other companies to which the patent lower-level cluster of the subject company and other companies belongs (cluster groups G1 to G4 in FIG. 16C) are output.

In this map, in addition to being able to assess the strengths and weaknesses of the subject company and other companies in the specific technology areas for each patent lower-level cluster of the subject company and other companies, it is also possible to assess the strengths and weaknesses of the subject company and other companies for the overall technical field, including the specific technology areas, for each of the patent higher-level clusters of the subject company and other companies.

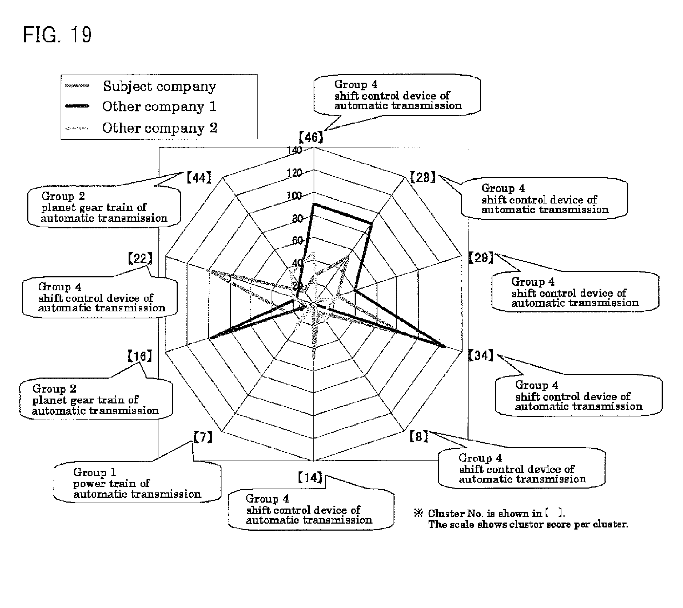

FIG. 19 is a graph showing a further example of competition analysis of Example 5. Here, an example of 70 lower-level clusters as the patent clusters of the subject company and other companies is shown. In particular, the company technical document group analysis data calculation unit 400 uses the 70 lower-level clusters as the patent clusters of the subject company and other companies, the generated lower-level clusters are classified by company to generate company-unit clusters, and then the cluster score is calculated by company. However, here the company technical document group data calculation unit 400 only uses 10 patent clusters of the subject company and other companies of the 70 patent clusters of the subject company and other companies to be output, and for each of these 10 patent clusters of the subject company and other companies, only the cluster scores for the company-unit clusters of 3 companies, including the subject company, are used to generate a 10-axis radar chart which is output via output device 4.

In this map only the prescribed number of clusters of the patent clusters of the subject company and other companies is selected to make it possible to display only the patent clusters of the subject company and other companies to be focused on. Further, because only the specified companies, including the subject company, are selected, it is possible to make a comparison only with main rival companies.

Note that the cluster score output method is not limited to maps like this one and may also be shown with numerical values in a list.

## Claims

1. A company technical document group analysis supporting device, comprising:

   index term extraction means for extracting index terms from.a document group of a subject company including technical documents;
   clustering means for classifying the document group of the subject company under given conditions to obtain multiple clusters;

number-of-documents determination means for determining the number of documents belonging to each cluster;

appearance frequency calculating means for calculating a function value of an appearance frequency in each cluster for each of the extracted index terms;

per-cluster keyword point calculating means for dividing, for each cluster, the function value of the appearance frequency in each cluster for each of the index terms by the number of documents belonging to each cluster so as to calculate a per-cluster keyword point; and

entire-cluster keyword point calculating means for calculating, for each index term, the total value for the entire clusters of the calculation results by the per-cluster keyword point calculating means.

2. The company technical document group analysis supporting device according to claim 1, further comprising intra-cluster high-rank term determination means for determining for each cluster whether each index term is within an upper prescribed number for the function value of the appearance frequency in each cluster,

wherein the per-cluster keyword point calculating means divides, for each cluster, the function value of the appearance frequency in each cluster for each of the index terms within the upper prescribed number for the function value of the appearance frequency by the number of documents belonging to each cluster so as to calculate the per-cluster keyword point.

3. The company technical document group analysis supporting device according to claim 1, further comprising suitableness calculating means for dividing for each cluster the average of the appearance frequency in the cluster of a prescribed number of index terms that are highly evaluated through the function value of the appearance frequency by the number of documents within the cluster so as to calculate a keyword suitableness,

wherein the per-cluster keyword point calculating means multiplies the keyword suitableness by the results of dividing the function value of the appearance frequency by the number of documents belonging to each cluster so as to calculate the per-cluster keyword point.

4. A company technical document group analysis supporting device, comprising:

index term extraction means for extracting index terms from a multiple-field document group of a subject company including technical documents of multiple fields;

clustering means for classifying the multiple-field document group of the subject company under given conditions to obtain multiple clusters;

number-of-documents determination means for determining the number of documents belonging to each cluster;

appearance frequency calculating means for calculating a function value of an appearance frequency of each of the extracted index terms in each cluster;

intra-cluster high-rank term determination means for determining for each cluster whether each index term is within an upper prescribed number of the function value of the appearance frequency in each cluster;

per-cluster keyword point calculating means for dividing, for each cluster, the function value of the appearance frequency in each cluster for each of the index terms within the upper prescribed number for the function value of the appearance frequency by the number of documents belonging to each cluster so as to calculate a per-cluster keyword point;

entire-cluster keyword point calculating means for calculating, for each index term, the total value for the entire clusters of the calculation results by the per-cluster keyword point calculating means;

keyword extraction means for extracting a keyword based on the calculated entire-cluster keyword points;

specific-field document group extraction means for extracting a specific-field document group from a multiple-field document group of the subject company and other company including technical documents of multiple fields based on the extracted keyword;

relative share calculating means for dividing the number of documents of a specific-field document group of the subject company, which is a document group of the subject company in the extracted specific-field document group, by the number of documents of a specific-field document group of the other company selected under given conditions from a document group of the other company in the extracted specific-field document group so as to calculate a relative share;

increase-rate calculating means for calculating a rate of increase of the number of documents per unit time in the specific-field document group of the subject company based on time information of each document belonging to the specific-field document group of the subject company; and

output means for outputting a combination of the relative share calculated by the relative share calculating means and the rate of increase calculated by the increase-rate calculating means.

5. The company technical document group analysis supporting device according to claim 4,

wherein the output means comprises visualization means for performing display by placing the relative share calculated by the relative share calculating means as a first axis of a coordinate system and the rate of increase calculated by the increase-rate calculating means as a second axis of the coordinate system.

6. The company technical document group analysis supporting device according to claim 4 or 5,
wherein the given condition for selecting the specific-field document group of the other company in the relative share calculation is that it is a document group of a company, other than the subject company, with the greatest number of documents, and
wherein the output means outputs a magnitude relation between the relative share calculated by the relative share calculating means under the given condition and a relative share reference value calculated when the number of documents of the specific-field document group of the subject company and the number of documents of the specific field-document group of the other company are the same.

7. A company technical document group analysis supporting device, comprising:

document attribute extraction means for extracting document attributes of each document belonging to a technical document group;
clustering means for classifying the technical document group under given conditions to obtain multiple clusters;
evaluation value calculating means for calculating, for each cluster and each document attribute, an evaluation value based on a function value of an appearance frequency of the document attributes in each cluster obtained through the classification;
maximum share calculating means for calculating for each cluster the sum of the evaluation values of each of the document attributes in each cluster for all of the document attributes extracted from the technical document group, then calculating for each cluster and each document attribute the ratio of the evaluation value of each document attribute to said sum, and then calculating for each document attribute the maximum value of said ratio in all clusters belonging to the technical document group so as to calculate a maximum share of each document attribute in the technical document group;
degree of concentration calculating means for calculating for each of the document attributes the sum of the evaluation values in each cluster for all the clusters belonging to the technical document group, then calculating for each cluster the ratio of the evaluation value in each cluster to said sum, then calculating the respective squares of said ratio and then calculating the sum of the squares of said ratio for all of the clusters belonging to the technical document group so as to calculate a degree of concentration of the distribution of each document attribute in the technical document group; and
output means for outputting for each document attribute a combination of the maximum share calculated by the maximum share calculating means and the degree of concentration calculated by the degree of concentration calculating means.

8. A company technical document group analysis supporting device, comprising:

document attribute extraction means for extracting contents information of each document belonging to a technical document group of a subject company;
clustering means for classifying the technical document group of the subject company under given conditions to obtain multiple clusters;
evaluation value calculating means for calculating, for each cluster and each contents information, an evaluation value based on a function value of an appearance frequency of the extracted contents information in each cluster obtained through the classification;
maximum share calculating means for calculating for each cluster the sum of the evaluation values of each of the extracted contents information in each cluster for all of the contents information extracted from the technical document group of the subject company, then calculating for each cluster and each contents information the ratio of the evaluation value of each contents information to said sum, and then calculating for each contents information the maximum value of said ratio in all clusters belonging to the technical document group of the subject company so as to calculate a maximum share of each contents information in the technical document group of the subject company;
degree of concentration calculating means for calculating for each of the extracted contents information the sum of the evaluation values in each cluster for all the clusters belonging to the technical document group of the subject company, then calculating for each cluster the ratio of the evaluation value in each cluster to said sum, then calculating the respective squares of said ratio, and then calculating the sum of the squares of said ratio for all of the clusters belonging to the technical document group of the subject company so as to calculate a degree of concentration of the distribution of each contents information in the technical document group of the subject company; and

output means for outputting for each contents information a combination of the maximum share calculated by the maximum share calculating means and the degree of concentration calculated by the degree of concentration calculating means.

9. A company technical document group analysis supporting device, comprising:

document attribute extraction means for extracting person information of each document belonging to a technical document group;

clustering means for classifying the technical document group under given conditions to obtain multiple clusters;

evaluation value calculating means for calculating, for each cluster and each person information, an evaluation value based on a function value of an appearance frequency of the extracted person information in each cluster obtained through the classification;

maximum share calculating means for calculating for each cluster the sum of the evaluation values of each of the extracted person information in each cluster for all of the person information extracted from the technical document group, then calculating for each cluster and each person information the ratio of the evaluation value of each person information to said sum, and then calculating for each person information the maximum value of said ratio in all clusters belonging to the technical document group so as to calculate a maximum share of each person information in the technical document group;

degree of concentration calculating means for calculating for each of the extracted person information the sum of the evaluation values in each cluster for all the clusters belonging to the technical document group, then calculating for each cluster the ratio of the evaluation value in each cluster to said sum, then calculating the respective squares of said ratio, and then calculating the sum of the squares of said ratio for all of the clusters belonging to the technical document group so as to calculate a degree of concentration of the distribution of each person information in the technical document group; and

output means for outputting for each person information a combination of the maximum share calculated by the maximum share calculating means and the degree of concentration calculated by the degree of concentration calculating means.

10. The company technical document group analysis supporting device according to any one of claims 7 to 9, wherein the output means comprises visualization means for performing display by placing the degree of concentration calculated by the degree of concentration calculating means as a first axis of a coordinate system and the maximum share calculated by the maximum share calculating means as a second axis of the coordinate system.

11. A company technical document group analysis supporting device, comprising:

a database in which historical information is recorded for each document of a patent document group of a subject company including publications of unexamined patent applications and publications of allowed patents;

number-of-documents determination means for determining the "number of documents" belonging to the patent document group;

index calculating means for calculating multiple indexes for the patent document group based on the historical information recorded in the database;

patent impact calculating means for applying a specified weight to the "number of documents" of the patent document group so as to calculate a patent impact index;

historical information spatial distance calculating means for calculating a mean square of the indexes based on the historical information of the patent document group so as to calculate a historical information spatial distance index;

evaluation value calculating means for multiplying

the patent impact index calculated by the patent impact calculating means by the historical information spatial distance index calculated by the historical information spatial distance calculating means so as to calculate an evaluation value; and

output means for outputting the evaluation value calculated by the evaluation value calculating means.

12. A company technical document group analysis supporting device, comprising:

a database in which time information and historical information are recorded for each document of a patent document group of a subject company including publications of unexamined patent applications and publications of allowed patents;

clustering means for classifying the patent document group under given conditions to obtain multiple clusters;

number-of-documents determination means for determining the "number of documents" belonging to each cluster;

index calculating means for calculating multiple indexes for each cluster based on the representative value of the time information of the documents recorded in the database and the historical information of the documents recorded in the database;

patent impact calculating means for applying for each cluster a specified weight to the "number of documents" so as to calculate a patent impact index;

historical information spatial distance calculating means for calculating for each cluster a mean square of the indexes based on the historical information so as to calculate a historical information spatial distance index;

evaluation value calculating means for multiplying for each cluster the patent impact index calculated by the patent impact calculating means by the historical information spatial distance index calculated by the historical information spatial distance calculating means so as to calculate an evaluation value; and

output means for outputting for each cluster a combination of the evaluation value calculated by the evaluation value calculating means and the representative value of the time information calculated by the index calculating means.

**13.** A company technical document group analysis supporting device, comprising:

a database in which a patent document group of a subject company and other companies including publications of unexamined patent applications and publications of allowed patents is recorded and in which time information and historical information for each document of a patent document group of the subject company are recorded;

clustering means for classifying the patent document group of the subject company and other companies under given conditions to obtain multiple clusters;

number-of-documents determination means for determining the "number of documents" belonging to each cluster and the "number of documents" of a patent document group of the subject company belonging to each cluster;

index calculating means for calculating multiple indexes for each patent document group of the subject company among patent document groups belonging to each cluster based on the representative value of the time information of the documents recorded in the database and the historical information of the documents recorded in the database;

patent impact.calculating means for applying, for each patent document group of the subject company belonging to each cluster, a specified weight to the "number of documents" of each patent document group of the subject company belonging to each cluster so as to calculate a patent impact index;

historical information spatial distance calculating means for calculating, for each patent document group of the subject company belonging to each cluster, a mean square of the indexes based on the historical information so as to calculate a historical information spatial distance index;

evaluation value calculating means for multiplying, for each patent document group of the subject company belonging to each cluster, the patent impact index calculated by the patent impact calculating means by the historical information spatial distance index calculated by the historical information spatial distance calculating means so as to calculate an evaluation value;

intra-cluster share calculating means for calculating for each cluster the ratio of the "number of documents" of the patent document group of the subject company belonging to the cluster to the "number of documents" belonging to the cluster so as to calculate a share in cluster; and

output means for outputting for each cluster a combination of the evaluation value calculated by the evaluation value calculating means, the representative value of the time information calculated by the index calculating means, and the share in cluster calculated by the intra-cluster share calculating means.

**14.** The company technical document group analysis supporting device according to claim 12 or 13, wherein the output means comprises visualization means for performing display by placing the representative value of the time information of the documents belonging to each cluster as a first axis of a coordinate system and the evaluation value of the cluster calculated by the evaluation value calculating means as a second axis of the coordinate system.

**15.** The company technical document group analysis supporting device according to any one of claims 11 to 14, wherein the database records at least "the number of other company citations and/or the number of oppositions or invalidation trials," "whether an examination was requested," and "whether a patent was.granted" as the historical information of each document;

wherein the index calculating means calculates "the total number of other company citations and/or the total number of oppositions or invalidation trials," "examination request ratio," "patent grant ratio," and other indexes as indexes based on the historical information;

wherein the patent impact calculating means applies a weight calculated from "the total number of other company citations and/or the total number of oppositions or invalidation trials" to the "number of documents" so as to calculate the patent impact index; and

wherein the historical information spatial distance calculating means calculates the mean square of the "examination request ratio," "patent grant ratio" and other indexes so as to calculate the historical information spatial distance index.

16. A company technical document group analysis supporting method, comprising:

an index term extraction step for extracting index terms from a document group of a subject company including a technical document group;

a clustering step for classifying the document group of the subject company under given conditions to obtain multiple clusters;

a number-of-documents determination step for determining the number of documents belonging to each cluster;

an appearance frequency calculating step for calculating a function value of an appearance frequency in each cluster for each of the extracted index terms;

a per-cluster keyword point calculating step for dividing, for each cluster, the function value of the appearance frequency in each cluster for each of the index terms by the number of documents belonging to each cluster so as to calculate a per-cluster keyword point; and

an entire-cluster keyword point calculating step for calculating, for each index term, the total value for the entire clusters of the calculation results by the per-cluster keyword point calculating step.

17. A company technical document group analysis supporting method, comprising:

a document attribute extraction step for extracting document attributes of each document belonging to a technical document group;

a clustering step for classifying the technical document group under given conditions to obtain multiple clusters;

an evaluation value calculating step for calculating, for each cluster and each document attribute, an evaluation value based on a function value of an appearance frequency of the document attributes in each cluster obtained through the classification;

a maximum share calculating step for calculating for each cluster the sum of the evaluation values of each of the document attributes in each cluster for all of the document attributes extracted from the technical document group, then calculating for each cluster and each document attribute the ratio of the evaluation value of each document attribute to said sum, and then calculating for each document attribute the maximum value of said ratio in all clusters belonging to the technical document group so as to calculate a maximum share of each document attribute in the technical document group;

a degree of concentration calculating step for calculating for each of the document attributes the sum of the evaluation values in each cluster for all the clusters belonging to the technical document group, then calculating for each cluster the ratio of the evaluation value in each cluster to said sum, then calculating the respective squares of said ratio, and then calculating the sum of the squares of said ratio for all of the clusters belonging to the technical document group so as to calculate a degree of concentration of the distribution of each document attribute in the technical document group; and

an output step for outputting for each document attribute a combination of the maximum share calculated by the maximum share calculating step and the degree of concentration calculated by the degree of concentration calculating step.

18. A company technical document group analysis supporting method, comprising:

a step of reading historical information from a database in which the historical information is recorded for each document of a patent document group of a subject company including publications of unexamined patent applications and publications of allowed patents;

a number-of-documents determination step for determining the "number of documents" belonging to the patent document group;

an index calculating step for calculating multiple indexes for the patent document group based on the historical information recorded in the database;

a patent impact calculating step for applying a specified weight to the "number of documents" of the patent document group so as to calculate a patent impact index;

a historical information spatial distance calculating step for calculating a mean square of the indexes based on the historical information of the patent document group so as to calculate a historical information spatial distance index;

an evaluation value calculating step for multiplying the patent impact index calculated by the patent impact calculating step by the historical information spatial distance index calculated by the historical information spatial distance calculating step so as to calculate an evaluation value; and

an output step for outputting the evaluation value calculated by the evaluation value calculating step.

**19.** A company technical document group analysis supporting program for causing a computer to execute:

an index term extraction step for extracting index terms from a document group of a subject company including a technical document group;

a clustering step for classifying the document group of the subject company under given conditions to obtain multiple clusters;

a number-of-documents determination step for determining the number of documents belonging to each cluster;

an appearance frequency calculating step for calculating a function value of an appearance frequency in each cluster for each of the extracted index terms;

a per-cluster keyword point calculating step for dividing, for each cluster, the function value of the appearance frequency in each cluster for each of the index terms by the number of documents belonging to each cluster so as to calculate a per-cluster keyword point; and

an entire-cluster keyword point calculating step for calculating, for each index term, the total value for the entire clusters of the calculation results by the per-cluster keyword point calculating step.

**20.** A company technical document group analysis supporting program for causing a computer to execute:

a document attribute extraction step for extracting document attributes of each document belonging to a technical document group;

a clustering step for classifying the technical document group under given conditions to obtain multiple clusters;

an evaluation value calculating step for calculating, for each cluster and each document attribute, an evaluation value based on a function value of an appearance frequency of the document attributes in each cluster obtained through the classification;

a maximum share calculating step for calculating for each cluster the sum of the evaluation values of each of the document attributes in each cluster for all of the document attributes extracted from the technical document group, then calculating for each cluster and each document attribute the ratio of the evaluation value of each document attribute to said sum, and then calculating for each document attribute the maximum value of said ratio in all clusters belonging to the technical document group so as to calculate a maximum share of each document attribute in the technical document group;

a degree of concentration calculating step for calculating for each of the document attributes the sum of the evaluation values in each cluster for all the clusters belonging to the technical document group, then calculating for each cluster the ratio of the evaluation value in each cluster to said sum, then calculating the respective squares of said ratio, and then calculating the sum of the squares of said ratio for all of the clusters belonging to the technical document group so as to calculate a degree of concentration of the distribution of each document attribute in the technical document group; and

an output step for outputting for each document attribute a combination of the maximum share calculated by the maximum share calculating step and the degree of concentration calculated by the degree of concentration calculating step.

**21.** A company technical document group analysis supporting program for causing a computer to execute:

a step of reading historical information from a database in which the historical information is recorded for each document of a patent document group of a subject company including publications of unexamined patent applications and publications of allowed patents;

a number-of-documents determination step for determining the "number of documents" belonging to the patent document group;

an index calculating step for calculating multiple indexes for the patent document group based on the historical information recorded in the database;

a patent impact calculating step for applying a specified weight to the "number of documents" of the patent document group so as to calculate a patent impact index;

a historical information spatial distance calculating step for calculating a mean square of the indexes based on the historical information of the patent document group so as to calculate a historical information spatial distance index;

an evaluation value calculating step for multiplying the patent impact index calculated by the patent impact calculating step by the historical information spatial distance index calculated by the historical information spatial distance calculating step so as to calculate an evaluation value; and

an output step for outputting the evaluation value calculated by the evaluation value calculating step.

FIG. 1

2: INPUT DEVICE

3: RECORDING DEVICE

1: PROCESSING DEVICE

TECHNICAL DOCUMENT GROUP READING UNIT — 100

INTRA-DOCUMENT-GROUP DOCUMENT ATTRIBUTE EXTRACTION UNIT — 200

DOCUMENT ATTRIBUTE EVALUATION VALUE CALCULATION UNIT — 300

COMPANY TECHNICAL DOCUMENT GROUP ANALYSIS DATA CALCULATION UNIT — 400

CONDITION RECORDING UNIT — 31

PROCESSING RESULT STORAGE UNIT — 32

DOCUMENT STORAGE UNIT — 33

4: OUTPUT DEVICE

FIG. 2

START COMPANY TECHNICAL DOCUMENT GROUP ANALYSIS

READ TECHNICAL DOCUMENT GROUP — S100

EXTRACT INTRA-DOCUMENT-GROUP DOCUMENT ATTRIBUTE — S200

CALCULATE DOCUMENT ATTRIBUTE EVALUATION VALUE — S300

CALCULATE COMPANY TECHNICAL DOCUMENT GROUP ANALYSIS DATA — S400

END

FIG. 3

```
        ┌─────────────────────────┐
        │         START           │
        │       EXAMPLE 1         │
        └─────────────────────────┘
                    │
                    ▼                    ┌─ S111
        ┌─────────────────────────┐
(100)   │   READ DOCUMENT GROUP    │
        │    OF SUBJECT COMPANY    │
        └─────────────────────────┘
                    │
                    ▼                    ┌─ S211
        ┌─────────────────────────┐
(200)   │    EXTRACT INDEX TERMS   │
        └─────────────────────────┘
                    │
                    ▼                    ┌─ S311
        ┌─────────────────────────┐
        │   CLUSTER DOCUMENT GROUP │
        └─────────────────────────┘
                    │
                    ▼                    ┌─ S312
        ┌─────────────────────────┐
        │ DETERMINE THE NUMBER OF  │
(300)   │  DOCUMENTS WITHIN A      │
        │        CLUSTER           │
        └─────────────────────────┘
                    │
                    ▼                    ┌─ S313
        ┌─────────────────────────┐
        │ CALCULATE FUNCTION VALUE │
        │ OF APPEARANCE FREQUENCY  │
        │      IN A CLUSTER        │
        └─────────────────────────┘
                    │
                    ▼                    ┌─ S411
        ┌─────────────────────────┐
        │   DETERMINE HIGH RANK    │
        │   TERMS WITHIN A CLUSTER │
        └─────────────────────────┘
                    │
                    ▼                    ┌─ S412
        ┌─────────────────────────┐
        │  CALCULATE PER-CLUSTER   │
(400)   │      KEYWORD POINT       │
        └─────────────────────────┘
                    │
                    ▼                    ┌─ S413
        ┌─────────────────────────┐
        │ CALCULATE ENTIRE-CLUSTER │
        │      KEYWORD POINT       │
        └─────────────────────────┘
                    │
                    ▼                    ┌─ S414
        ┌─────────────────────────┐
        │     EXTRACT KEYWORD      │
        └─────────────────────────┘
                    │
                    ▼
        ┌─────────────────────────┐
        │           END           │
        └─────────────────────────┘
```

## FIG. 4

```
              ┌─────────────────────┐
              │        START        │
              │      EXAMPLE 2       │
              └─────────────────────┘
                         │              ⌐ S111
        ┌─────────────────────────────────────┐
(100) ⟨ │      READ DOCUMENT GROUP            │
        │        OF SUBJECT COMPANY           │
        └─────────────────────────────────────┘
                         │              ⌐ S211
        ┌─────────────────────────────────────┐
(200) ⟨ │        EXTRACT INDEX TERMS          │
        └─────────────────────────────────────┘
                         │              ⌐ S311
        ┌─────────────────────────────────────┐
        │       CLUSTER DOCUMENT GROUP        │
        └─────────────────────────────────────┘
                         │              ⌐ S312
        ┌─────────────────────────────────────┐
(300)   │  DETERMINE THE NUMBER OF DOCUMENTS  │
        │          WITHIN A CLUSTER           │
        └─────────────────────────────────────┘
                         │              ⌐ S313
        ┌─────────────────────────────────────┐
        │    CALCULATE FUNCTION VALUE OF      │
        │  APPEARANCE FREQUENCY IN A CLUSTER  │
        └─────────────────────────────────────┘
                         │              ⌐ S411
        ┌─────────────────────────────────────┐
        │      DETERMINE HIGH RANK TERMS      │
        │          WITHIN A CLUSTER           │
        └─────────────────────────────────────┘
                         │              ⌐ S412
        ┌─────────────────────────────────────┐
        │   CALCULATE PER-CLUSTER KEYWORD POINT│
        └─────────────────────────────────────┘
                         │              ⌐ S413
        ┌─────────────────────────────────────┐
        │   CALCULATE ENTIRE-CLUSTER KEYWORD  │
        │                POINT                │
        └─────────────────────────────────────┘
                         │              ⌐ S414
        ┌─────────────────────────────────────┐
        │           EXTRACT KEYWORD           │
        └─────────────────────────────────────┘
                         │              ⌐ S421
        ┌─────────────────────────────────────┐
(400)   │  EXTRACT SPECIFIC FIELD DOCUMENT GROUP│
        └─────────────────────────────────────┘
                         │              ⌐ S422
        ┌─────────────────────────────────────┐
        │       CALCULATE RELATIVE SHARE      │
        └─────────────────────────────────────┘
                         │              ⌐ S423
        ┌─────────────────────────────────────┐
        │      CALCULATE RATE OF INCREASE     │
        └─────────────────────────────────────┘
                         │              ⌐ S424
        ┌─────────────────────────────────────┐
        │               OUTPUT                │
        └─────────────────────────────────────┘
                         │
              ┌─────────────────────┐
              │         END         │
              └─────────────────────┘
```

## FIG. 5

PORTFOLIO MAP OF COMPANY A
For years 1993–1995 → 1996–1998 → 1999–2001

## FIG. 6

FIG. 7

```
              ┌─────────────────────┐
              │       START         │
              │     EXAMPLE 3       │
              └─────────────────────┘
                        │
                        ▼                    ⌐S131
   (100) ┌─────────────────────────────────────┐
         │         READ DOCUMENT GROUP          │
         └─────────────────────────────────────┘
                        │
                        ▼                    ⌐S231
   (200) ┌─────────────────────────────────────┐
         │       EXTRACT DOCUMENT ATTRIBUTE     │
         └─────────────────────────────────────┘
                        │
                        ▼                    ⌐S331
         ┌─────────────────────────────────────┐
         │        CLUSTER DOCUMENT GROUP        │
         └─────────────────────────────────────┘
   (300)                │
                        ▼                    ⌐S332
         ┌─────────────────────────────────────┐
         │     CALCULATE EVALUATION VALUE       │
         │          IN EACH CLUSTER             │
         └─────────────────────────────────────┘
                        │
                        ▼                    ⌐S431
         ┌─────────────────────────────────────┐
         │        CALCULATE MAXIMUM SHARE       │
         └─────────────────────────────────────┘
                        │
                        ▼                    ⌐S432
   (400) ┌─────────────────────────────────────┐
         │    CALCULATE DEGREE OF CONCENTRATION │
         └─────────────────────────────────────┘
                        │
                        ▼                    ⌐S433
         ┌─────────────────────────────────────┐
         │               OUTPUT                 │
         └─────────────────────────────────────┘
                        │
                        ▼
              ┌─────────────────────┐
              │        END          │
              └─────────────────────┘
```

FIG. 8

INDEX TERM CHARACTERISTICS MAP OF COMPANY A

FIG. 9

APPLICANT CHARACTERISTICS MAP

FIG. 10

FIG. 11

FIG. 12

## FIG. 13

START
EXAMPLE 4

S141
READ PATENT DOCUMENT GROUP
OF SUBJECT COMPANY

(100)

S142
DETERMINE THE NUMBER OF DOCUMENTS

S241
(200)
READ HISTORICAL INFORMATION

S341
(300)
CALCULATE INDEXES BASED ON
HISTORICAL INFORMATION

S441
CALCULATE PATENT IMPACT INDEX

S442
CALCULATE HISTORICAL INFORMATION
SPATIAL DISTANCE INDEX

(400)

S443
CALCULATE CLUSTER SCORE

S444
OUTPUT

END

## FIG. 14

CLUSTER POSITION MAP OF COMPANY A

AVERAGE APPLICATION DATE (YEAR)

## FIG. 15

AVERAGE APPLICATION DATE (YEAR)

FIG. 16A

CLUSTERING PATENT DOCUMENT GROUP OF THE SUBJECT COMPANY

FOCUSED TECHNOLOGY

FIG. 16B

PATENT DOCUMENT GROUP OF THE SUBJECT COMPANY AND OTHER COMPANIES

→

SPECIFIC FIELD PATENT DOCUMENT GROUP OF THE SUBJECT COMPANY AND OTHER COMPANIES (HIGH RANKED DOCUMENTS IN SIMILARITY WITH THE FOCUSED TECHNOLOGY)

FIG. 16C

CLUSTERING THE SPECIFIC FIELD PATENT DOCUMENT GROUP OF THE SUBJECT COMPANY AND OTHER COMPANIES

| | | |
|---|---|---|
| cluster line 1 | cluster group 1 |
| cluster line 2 | cluster group 2 |
| cluster line 3 | cluster group 2 |
| cluster line 4 | cluster group 2 |
| cluster line 5 | cluster group 3 |
| cluster line 6 | cluster group 4 |
| cluster line 7 | cluster group 4 |
| cluster line 8 | cluster group 4 |

low-level clusters of the subject company and other companies

mid-level clusters of the subject company and other companies

high-level clusters of the subject company and other companies

FIG. 16D

PATENT CLUSTERS OF THE SUBJECT COMPANY AND OTHER COMPANIES

COMPANY LEVEL CLUSTERS (SUBJECT COMPANY)

COMPANY LEVEL CLUSTERS (OTHER COMPANY)

## FIG. 17

## FIG. 18

FIG. 19

## INTERNATIONAL SEARCH REPORT

| International application No. |
|---|
| PCT/JP2006/320347 |

A. CLASSIFICATION OF SUBJECT MATTER
*G06F17/30(2006.01)i, G06Q50/00(2006.01)i*

According to International Patent Classification (IPC) or to both national classification and IPC

B. FIELDS SEARCHED

Minimum documentation searched (classification system followed by classification symbols)
G06F17/30, G06Q50/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 7-230439 A  (Fujitsu Ltd.),<br>29 August, 1995 (29.08.95),<br>Full text; all drawings<br>(Family: none) | 1-6,16,19 |
| A | JP 11-143892 A  (Fujitsu Ltd.),<br>28 May, 1999 (28.05.99),<br>Full text; all drawings<br>(Family: none) | 1-6,16,19 |
| A | JP 2002-189738 A  (Inpatekku Kabushiki Kaisha),<br>05 July, 2002 (05.07.02),<br>Full text; all drawings<br>(Family: none) | 1-6,16,19 |

☒ Further documents are listed in the continuation of Box C.       ☐ See patent family annex.

| | |
|---|---|
| *       Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 09 January, 2007 (09.01.07) | 16 January, 2007 (16.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/320347 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2003-248692 A  (NEC Corp.),<br>05 September, 2003 (05.09.03),<br>Full text; all drawings<br>& WO 2005/050480 A2 | 7-10,17,20 |
| A | Kimio ARAI, "Tokkyo Joho Kaisekiron", Journal<br>of Information Processing and Management, 01<br>October, 1983 (01.10.83), Vol.26, No.7, pages<br>535 to 553, ISSN 0021-7298 | 11-15,18,21 |

Form PCT/ISA/210 (continuation of second sheet) (April 2005)

## INTERNATIONAL SEARCH REPORT

| International application No. |
| --- |
| PCT/JP2006/320347 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
   (See the extra sheets.)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**        ☒ The additional search fees were accompanied by the applicant's protest and, where applicable,
the                                           payment of a protest fee..

                                        ☐ The additional search fees were accompanied by the applicant's protest but the applicable protest fee was not paid within the time limit specified in the invitation.

                                        ☐ No protest accompanied the payment of additional search fees.

Form PCT/ISA/210 (continuation of first sheet (2)) (April 2005)

<table>
<tr><td>**INTERNATIONAL SEARCH REPORT**</td><td>International application No.<br>PCT/JP2006/320347</td></tr>
</table>

Continuation of Box No.III of continuation of first sheet(2)

1. Technical Features of the Claims
   The special technical feature of the group of claims 1-6, 16, 19 (hereinafter referred to as "first group") is to comprise "index word extracting means for extracting an index word from a group of technical documents of an object company, clustering means for classifying the document group of the object company under a certain condition to acquire clusters, number-of-documents judging means for judging the number of documents in each cluster, appearance frequency calculating means for calculating the function value of the appearance frequency of each extracted index word in each cluster, keyword-by-cluster point calculating means for calculating the keyword point(s) of each cluster by dividing the function value of the appearance frequency of each index word in each cluster by the number of documents belonging to each cluster, and all clusters keyword point calculating means for calculating the total for all the clusters of the results of the calculation by the keyword-by-cluster point calculating means for each index word."

   The special technical feature of the group of claims 7-10, 17, 20 (hereinafter referred to as "second group") is to comprise "document attribute extracting means for extracting a document attribute of each document belonging to a technical document group, clustering means for classifying the document group under a certain condition to acquire clusters, evaluation value calculating means for calculating the evaluation value based of the function value of the appearance frequency of the document attribute in each cluster acquired by the classification for each cluster and for each document attribute, maximum share calculating means for calculating the maximum share of each document attribute in the group of technical documents by calculating the total of the evaluation values of the document attributes of the clusters for all the document attributes extracted from the technical document group for each cluster, calculating the ratio of the evaluation value of each document attribute to the total for each cluster and for each document attribute, and calculating a maximum value of the ratio in all the clusters belonging to the technical document group for each document attribute, degree-of-concentration calculating means for calculating the degree of concentration of the distribution of each document attribute in the technical document group by calculating the total of the evaluation values of all the clusters belonging to the technical document group for each document attribute, calculating the ratio of value in each cluster to the total for each cluster, calculating the square of each ratio, and calculating the total of the squares of the ratios of all the clusters belonging to the technical document group, and output means for outputting a combination of the maximum share calculated by the maximum share calculating means and the degree of concentration calculated by the degree-of-concentration calculating means for each document attribute."

   (Continued to the next extra sheet.)

Form PCT/ISA/210 (extra sheet) (April 2005)

The special technical feature of the group of claims 11-15, 18, 21 (hereinafter referred to as "third group") is to comprise "a database in which the proceeding information on each of the patent document group of an object company including unexamined patent publications and patent gazettes is recorded, number-of-documents judging means for judging "the number of documents" belonging to the patent document group, index calculating means for calculating indexes from the proceeding information on the patent document group recorded in the database, patent impact calculating means for calculating a patent impact index by applying a predetermined weight to "the number of documents" of the patent document group, proceeding information spatial distance calculating means for calculating the proceeding information spatial distance index by root-mean-squaring the index calculated from the proceeding information on the patent document group, evaluation value calculating means for calculating the evaluation value by multiplying the patent impact index calculated by the patent impact calculating means by the proceeding information spatial distance index calculated by the proceeding information spatial distance means, and output means for outputting the evaluation value calculated by the evaluation value calculating means."

2. Examination
(2-1) Concerning First Group and Second Group
Whether or not the function of "calculating the evaluation value of each document attribute belonging to a group of technical documents classified into clusters makes contribution over the prior art will be examined below.
JP 7-230439 A (Fujitsu Ltd.), 29 August, 1995 (29.08.95), for example, paragraphs [0054], [0055], and Figure 4, JP 11-143892 A (Fujitsu Ltd.), 28 May, 1999 (28.05.99), for example, [0029], [0030], and JP 2002-189738 A (Inpatekku Kabushiki Kaisha), 5 July, 2002 (05.07.02), for example, [0015] to [0017], and Figure 5 disclose "a technique of calculating the evaluation value of each document attribute belonging to a group of technical documents classified into clusters." Therefore, since "the technique of calculating the evaluation value of each document attribute belonging to a group of technical documents classified into clusters" makes no contribution over the prior art, it is not considered as a special technical feature prescribed in the above Rule.
It cannot be also considered that there exists the same or corresponding special technical feature between the first group of inventions and the second group of inventions.


(Continued to the next extra sheet.)

**INTERNATIONAL SEARCH REPORT**

International application No.

PCT/JP2006/320347

(2-2) Concerning First Group and Third Group

Whether or not the function, i.e., "a processing of calculating the evaluation value of a document attribute of a group of technical documents" makes contribution over the prior art will be examined below. The documents cited in above item (2-1) disclose "the processing of calculating the evaluation value of a document attribute of a group of technical documents."

Therefore, "the processing of calculating the evaluation value of a document attribute of a group of technical documents" is not a technique making contribution over the prior art, and is not a special technical feature prescribed in the above Rule. It cannot be also considered that there exist the same or corresponding special technical feature between the first group of inventions and the third group of inventions.

(2-3) Concerning Second Group and Third Group

The second group of inventions and the third group of inventions have been examined as stated above, and the same or corresponding special technical feature does not exist.

3. Conclusion

For the reasons above, there is not the same or corresponding special technical feature between the first group of inventions, the second group of inventions, and the third group of inventions. Therefore, the three groups of inventions of the claims of the present international application do not satisfy the requirement of unity of invention prescribed in PCT Rule 13.1.

Since no technical relationship involving one or more of the same or corresponding special technical features between the three groups can be seen, the inventions are not so linked as to form a single general inventive concept.

Form PCT/ISA/210 (extra sheet) (April 2005)

**EP 1 936 520 A1**

**REFERENCES CITED IN THE DESCRIPTION**

**Patent documents cited in the description**

- JP 2002189738 A